(19) Europäisches Patentamt
European Patent Office
Office européen des brevets

(11) **EP 4 636 922 A1**

(12) **EUROPEAN PATENT APPLICATION**
published in accordance with Art. 153(4) EPC

(43) Date of publication:
**22.10.2025 Bulletin 2025/43**

(21) Application number: **23940360.3**

(22) Date of filing: **15.09.2023**

(51) International Patent Classification (IPC):
***H01M 50/30*** (2021.01)      ***H01M 50/35*** (2021.01)
***H01M 50/244*** (2021.01)      ***H01M 50/249*** (2021.01)
***H01M 50/258*** (2021.01)      ***H01M 50/209*** (2021.01)

(52) Cooperative Patent Classification (CPC):
Y02E 60/10

(86) International application number:
**PCT/CN2023/119123**

(87) International publication number:
**WO 2024/250482 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.06.2023  CN 202310675424**

(71) Applicant: **Contemporary Amperex Technology
Co., Limited
Ningde, Fujian 352100 (CN)**

(72) Inventors:
• WU, Kai
  **Ningde, Fujian 352100 (CN)**
• KE, Jianhuang
  **Ningde, Fujian 352100 (CN)**
• LI, Yao
  **Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **BATTERY AND ELECTRIC APPARATUS**

(57)      Provided are a battery and an electric device. The battery includes a box body; a battery module located inside the box body, the battery module including at least one battery cell, each battery cell provided with a first pressure relief mechanism, and the box body having a second pressure relief mechanism; and a pressure relief channel connecting the first pressure relief mechanism of the at least one battery cell with the second pressure relief mechanism, the first pressure relief mechanism configured to release emissions generated inside the battery cell into the pressure relief channel under actuation, the pressure relief channel configured to guide the emissions to the second pressure relief mechanism, and the second pressure relief mechanism configured to release the emissions of the pressure relief channel to an exterior of the box body under actuation, where at least one of the battery cell, the battery module, the box body and the pressure relief channel is provided with a filter element, and the filter element is provided with filter holes configured to block passage of particulate matter in the emissions, reducing the high-temperature particulate matter ejected from the battery and improving the reliability of the battery in use.

FIG. 4

## Description

The present application claims the priority of Chinese Patent Application No. 202310675424.7, filed with the China National Intellectual Property Administration on June 7, 2023, entitled "BATTERY AND ELECTRIC DEVICE", the entire content of which is incorporated herein by reference.

TECHNICAL FIELD

The present application relates to the technical field of battery reliability, and in particular, to a battery and an electric device.

BACKGROUND

Batteries are widely used in various electronic devices, such as mobile phones, notebook computers, electric bicycles, electric vehicles, electric airplanes, electric ships, electric toy cars, electric toy ships, electric toy airplanes, electric tools, etc. Batteries may include nickel-cadmium batteries, nickel-hydrogen batteries, lithium-ion batteries, and secondary alkaline zinc-manganese batteries, etc.

In the development process of battery technology, in addition to researching the performance of batteries, how to improve the reliability of batteries during use is also one of the key research focuses of batteries.

The above statement merely provides the background information related to the present application and do not necessarily constitute the prior art.

SUMMARY

An objective of embodiments of the present application is to provide a battery and an electric device, so as to improve the reliability of the battery in use.

The technical solutions adopted in the embodiments of the present application are as follows:
in a first aspect, embodiments of the present application provide a battery, including a box body; a battery module located inside the box body, the battery module including at least one battery cell, each battery cell provided with a first pressure relief mechanism, and the box body having a second pressure relief mechanism; and a pressure relief channel connecting the first pressure relief mechanism of the at least one battery cell with the second pressure relief mechanism, the first pressure relief mechanism configured to release emissions generated inside the battery cell into the pressure relief channel under actuation, the pressure relief channel configured to guide the emissions to the second pressure relief mechanism, and the second pressure relief mechanism configured to release the emissions of the pressure relief channel to an exterior of the box body under actuation, where at least one of the battery cell, the battery module, the box body and the pressure relief channel is provided with a filter element, and the filter element is provided with filter holes configured to block passage of particulate matter in the emissions.

In the battery according to the embodiments of the present application, when the thermal runaway occurs in the battery cell in the battery, the first pressure release mechanism is activated, the emissions generated in the battery cell are released into the pressure release channel by the first pressure release mechanism and move to the second pressure release mechanism along the pressure release channel, and as the thermal runaway continues to be intensified, the second pressure release mechanism is activated, the emissions in the pressure release channel are released into the exterior of the box body by the second pressure release mechanism, and in this process, since at least one of the battery cell, the battery module, the box body and the pressure release channel is provided with the filter element, the filter holes of the filter element can block the passage of high-temperature particulate matter in the emissions, thereby reducing the high-temperature particulate matter ejected from the battery, which is advantageous in reducing the risk of the excessively high exhaust temperature of the battery and improving the reliability of the battery in use.

In some embodiments, when the filter element is provided on the battery cell, the first pressure relief mechanism and the filter element form an integrated structure, or the filter element is connected to the housing of the battery cell; and when the filter element is provided on the box body, the second pressure relief mechanism and the filter element have an integrated structure, or the filter element is connected to the box body; or a side wall of the box body is provided with the filter holes, and a portion of the side wall of the box body provided with the filter holes forms the filter element.

By adopting the technical solution of this embodiment, the filter can be flexibly attached to the box body, which is convenient to manufacture.

In some embodiments, when the filter element is provided in the box body, a side of the second pressure relief mechanism facing the battery module is provided with the filter element to block the particulate matter released by the battery cell from entering the second pressure relief mechanism; and/or a side of the second pressure relief mechanism facing away from the battery module is provided with the filter element to block the particulate matter released by the second pressure relief mechanism from passing through.

By adopting the technical solution of this embodiment, the mounting position of the filter element is flexible, which facilitates its processing and manufacturing.

In some embodiments, the sum of the cross-sectional areas of all the filter holes of the filter element is a filtration area. When the filter element is provided on the side of the second pressure relief mechanism facing the battery module, the filter element located on this side is a first filter element, and the filtration area of the first filter element is larger than the maximum pressure relief area of the second pressure relief mechanism. When the filter element is provided on the side of the second pressure relief mechanism facing away from the battery module, the filter element located on this side is a second filter element, and the filtration area of the second filter element is smaller than the maximum pressure relief area of the second pressure relief mechanism.

By adopting the technical solution of this embodiment, by adopting the technical solution of this embodiment, the flow area of the emissions decreases along the discharge path, which can achieve the effect of step-by-step pressure relief, is beneficial to improving the emission effect of the emissions, and improves the reliability of the battery in use. In addition, the gradual decrease of the flow area is also beneficial to reducing design redundancy and reducing the manufacturing cost.

In some embodiments, when a plurality of first filter elements are provided on the side of the second pressure relief mechanism facing the battery module, the plurality of first filter elements are arranged in sequence along the discharge path of the emissions released from the battery cells, and the filtration areas of the plurality of first filter elements decrease along the discharge path of the emissions. When a plurality of second filter elements are provided on the side of the second pressure relief mechanism facing away from the pressure relief channel, the plurality of second filter elements are arranged in sequence along the discharge path of the emissions released from the second pressure relief mechanism, and the filtration areas of the plurality of second filter elements decrease along the discharge path of the emissions.

By adopting the technical solution of this embodiment, multi-stage filtration of the emissions can be realized, which is beneficial to reducing the number of particulate matter emissions. At the same time, multi-stage pressure relief of the emissions can also be realized, the emission effect of the emissions is good, and it is beneficial to improving the reliability of the battery in use.

In some embodiments, when the plurality of first filter elements are provided on the side of the second pressure relief mechanism facing the battery module, the hole diameters of the filter holes of the plurality of first filter elements decrease along the discharge path of the emissions. When the plurality of second filter elements are provided on the side of the second pressure relief mechanism facing away from the pressure relief channel, the hole diameters of the filter holes of the plurality of second filter elements decrease along the discharge path of the emissions.

By adopting the technical solution of this embodiment, the large particulate matter in the emissions can be filtered out first, and then the small particulate matter in the emissions can be filtered out. Such step-by-step filtration is beneficial to reducing the probability of blockage of the filter element, reducing the risk of poor pressure relief, and improving the reliability of the battery in use.

In some embodiments, the filter element and the second pressure relief mechanism are disposed at an interval.

By adopting the technical solution of this embodiment, the risk of interference between the second pressure relief mechanism and the filter element can be reduced.

In some embodiments, the filter element includes a plate portion and an annular wall portion annularly provided around the plate portion. One end of the annular wall portion is connected to the plate portion, and the other end of the annular wall portion is connected to the box body. The annular wall portion is annularly provided around the second pressure relief mechanism, and at least one of the annular wall portion and the plate portion is provided with filter holes.

By adopting the technical solution of this embodiment, the structure of the filter element is simple, and the processing and manufacturing are simple.

In some embodiments, the filter element has a first filter portion and a second filter portion. Both the first filter portion and the second filter portion are provided with a plurality of filter holes. A first discharge path N' and a second discharge path N are formed between the first pressure relief mechanism and the second pressure relief mechanism of at least one battery cell. The first discharge path N' passes through the filter holes of the first filter portion, and the second discharge path N passes through the filter holes of the second filter portion. When the length of the first discharge path N' is greater than the length of the second discharge path N, the hole diameter of the filter holes of the first filter portion is larger than the hole diameter of the filter holes of the second filter portion.

By adopting the technical solution of this embodiment, the hole diameter of the filter holes of the first filter portion is larger than the hole diameter of the filter holes of the second filter portion. In this way, the low-temperature small particulate matter in the emissions flowing along the long discharge path will directly pass through the filter holes of the first filter portion and be discharged out of the battery. At the same time, the filter holes of the first filter portion will also block the large particles with higher temperature in the emissions. Moreover, the large and small particulate matter with high temperature in the emissions flowing along the short discharge path will be blocked by the filter holes of the second filter portion and will not be discharged out of the battery. In this way, the risk of the excessively high exhaust temperature of the battery can be reduced, and the reliability of the battery in use can be improved. In addition, through the cooperative design of the filter holes with different sizes, the emissions can be quickly discharged out of the battery, reducing the risk of internal pressure buildup in the box body.

In some embodiments, the number of the filter holes is plural, hole diameters of any two of the filter holes are the same, or hole diameters of at least two of the filter holes are different.

By adopting the technical solution of this embodiment, the hole diameters of the filter holes can be flexibly set, which is convenient for processing and manufacturing.

In some embodiments, the cross-sectional area of the filter hole with the largest diameter is S, the length of the shortest discharge path between the first pressure relief mechanism of at least one battery cell and the second pressure relief mechanism is L, and then $0.002\,\mathrm{m/mm^2}<\dfrac{L}{S}<55\,\mathrm{m/mm^2}$ , where the unit of L is m and the unit of S is mm².

By adopting the technical solution of this embodiment, through the setting of $0.002\,\mathrm{m/mm^2}<\dfrac{L}{S}<55\,\mathrm{m/mm^2}$ , the cross-sectional area of the filter hole with the largest diameter of the filter element and the shortest discharge path of the battery cell are rationally designed, reducing the risk of the excessively high exhaust temperature of the battery and contributing to improving the reliability of the battery in use.

In some embodiments, the cross-sectional area of the filter hole with the largest diameter is S, the shortest discharge path between the first pressure relief mechanism and the second pressure relief mechanism of any battery cell is L, and then $0.002\,\mathrm{m/mm^2}<\dfrac{L}{S}<55\,\mathrm{m/mm^2}$ , where the unit of L is m and the unit of S is mm².

By adopting the technical solution of this embodiment, the shortest discharge path of each battery cell and the cross-sectional area of the filter hole with the largest diameter of the filter element are all within a reasonable design range, better improving the reliability of the battery in use.

In some embodiments, $0.008\,\mathrm{m/mm^2}\le\dfrac{L}{S}\le16\,\mathrm{m/mm^2}$ .

By adopting the technical solution of this embodiment, the cross-sectional area of the filter hole with the largest diameter of the filter element and the shortest discharge path of the battery cell are more rationally designed. The risk of the excessively high exhaust temperature of the battery is smaller, and the reliability of the battery in use is better.

In some embodiments, $0.05\,\mathrm{m}\le L\le4\,\mathrm{m}$ .

By adopting the technical solution of this embodiment, the length of the shortest discharge path is within this range. The shortest discharge path is not designed to be too short, which would result in a short cooling time for the particulate matter, causing the temperature of the particulate matter discharged from the battery to be high and easily deteriorating the external environment of the battery. In addition, the shortest discharge path is not set to be too long, which would lead to a long emission time for the emissions and untimely pressure relief, resulting in severe damage to the box body.

In some embodiments, the volumetric energy density of the battery is E, the cross-sectional area of the filter hole with the largest aperture is S, and then $17\,(\mathrm{Wh/L})/\mathrm{mm^2}\le\dfrac{E}{S}\le11300\,(\mathrm{Wh/L})/\mathrm{mm^2}$ , where the unit of E is Wh/L and the unit of S is mm².

By adopting the technical solution of this embodiment, through the setting of $17\,(\mathrm{Wh/L})/\mathrm{mm^2}\le\dfrac{E}{S}\le11300\,(\mathrm{Wh/L})/\mathrm{mm^2}$ , the cross-sectional area of the filter hole with the largest aperture of the filter element and the volumetric energy density of the battery are rationally designed, reducing the risk of the excessively high exhaust temperature of the battery and contributing to improving the reliability of the battery in use.

In some embodiments, $23\,(\mathrm{Wh/L})/\mathrm{mm^2}\le\dfrac{E}{S}\le3200\,(\mathrm{Wh/L})/\mathrm{mm^2}$ .

By adopting the technical solution of this embodiment, the cross-sectional area of the filter hole with the largest aperture of the filter element and the volumetric energy density of the battery are more rationally designed. The risk of the excessively high exhaust temperature of the battery is smaller, and the reliability of the battery in use is better.

In some embodiments, $400\,\mathrm{Wh/L}\le E\le800\,\mathrm{Wh/L}$ .

By adopting the technical solution of this embodiment, the volumetric energy density E of most batteries is within the above range, so that the above formula can be applied to most batteries, and the range of application is wide.

In some embodiments, $0.06\,\mathrm{mm^2}\le S\le25\,\mathrm{mm^2}$ .

By adopting the technical solution of this embodiment, the cross-sectional area S of the filter hole with the largest hole diameter is within the above range, and the filter element can effectively intercept most of the high-temperature particulate matter, reducing the risk of the excessively high exhaust temperature of the battery.

In some embodiments, $0.25mm^2 \leq S \leq 6.25mm^2$ .

By adopting the technical solution of this embodiment, the cross-sectional area of the filter hole with the largest aperture is more rationally designed, which can further reduce, reduce the risk of the excessively high exhaust temperature of the battery.

In some embodiments, the pressure relief channel further includes a first sub-pressure relief channel for connecting with the second pressure relief mechanism. The battery further includes a partition, and the partition is used to separate the battery module from the first sub-pressure relief channel. The partition is provided with a plurality of first ventilable structures, and each first ventilable structure connects the first pressure relief mechanism of at least one battery cell and the first sub-pressure relief channel.

By adopting the technical solution of this embodiment, after the battery cell in the battery module undergoes thermal runaway, the emissions released by the first pressure relief mechanism of this battery cell enter the first pressure relief channel through the first ventilable structure, and the first pressure relief channel is separated from the battery module by the partition. In this way, the risk of contact between the emissions in the first pressure relief channel and the other battery cells in the battery module can be reduced, the risk of thermal runaway spreading can be reduced, and the reliability of the battery in use can be improved.

In some embodiments, the pressure relief channel includes at least two first sub-pressure relief channels, each first sub-pressure relief channel is connected to the first ventilable structure corresponding to a different battery cell, and the first sub-pressure relief channels are separated by the spacer element.

By adopting the technical solution of this embodiment, when one of the battery cells undergoes thermal runaway, the emissions released by this battery cell enter the first sub-pressure relief channel connected to this battery cell, and the first sub-pressure relief channels are separated by the spacer element. In this way, the emissions will not directly enter other first sub-pressure relief channels, which is beneficial to reducing the risk of thermal runaway spreading.

In some embodiments, the pressure relief channel further includes a communication channel. The wall face of the partition and the inner wall face of the box body enclose the communication channel, and each first sub-pressure relief channel is connected to the second pressure relief mechanism through the communication channel.

By adopting the technical solution of this embodiment, the communication channel is formed by enclosing the wall face of the partition and the inner wall face of the box body to form the communication channel, and the structure is simple, which is convenient for processing and manufacturing.

In some embodiments, the battery module includes at least one column of battery cells, each column of battery cells includes at least one battery cell, at least one first sub-pressure relief channel is correspondingly arranged for each column of battery cells, and each first sub-pressure relief channel extends along the arrangement direction of the corresponding column of battery cells. Each first ventilable structure corresponding to each column of battery cells is connected to the corresponding first sub-pressure relief channel.

By adopting the technical solution of this embodiment, when the battery cell undergoes thermal runaway, the emissions released by this battery cell will enter the corresponding first sub-pressure relief channel and be discharged. The emissions will not enter other first sub-pressure relief channels and come into contact with other battery cells, reducing the risk of thermal runaway spreading and improving the reliability of the battery cell.

In some embodiments, the second pressure relief mechanism is located on the side of the end of the battery module along the extension direction of the first sub-pressure relief channel.

By adopting the technical solution of this embodiment, after the battery cell undergoes thermal runaway, the emissions in the first sub-pressure relief channel can be quickly discharged to the second pressure relief mechanism, and the battery has a good pressure relief and exhaust effect.

In some embodiments, the communication channel is an annular channel, and the annular channel is annularly provided around the partition.

By adopting the technical solution of this embodiment, the emissions discharged from the first sub-pressure relief channel will enter the annular channel and flow along the annular channel. In this way, the discharge path of the emissions can be extended, thereby prolonging the cooling time of the particulate matter in the emissions. The risk of the particulate matter being discharged out of the battery and causing the excessively high exhaust temperature of the battery is small.

In some embodiments, end plates are provided at two ends of at least one column of battery cells. The end plates are inserted into the annular channel and connected to the inner wall face of the box body. The pressure relief channel also includes a second sub-pressure relief channel. The second sub-pressure relief channel intersects with the first sub-pressure relief channel, and the second sub-pressure relief channel is used to communicate the corresponding first sub-pressure relief channel with the annular channel.

By adopting the technical solution of this embodiment, the emissions released by the battery cell need to pass through the first sub-pressure relief channel, the second sub-pressure relief channel, and the annular channel before flowing to the second pressure relief mechanism and finally being discharged out of the battery. In this way, the discharge path of the emissions can be extended, and the cooling time of the particulate matter in the emissions is long, which is beneficial to reducing the risk of the excessively high exhaust temperature of the battery.

In some embodiments, end plates are provided at both ends of each column of battery cells, and each first sub-pressure relief channel is in communication with the second sub-pressure relief channel.

By adopting the technical solution of this embodiment, when any one of the battery cells in the battery cell undergoes thermal runaway, the emissions released by it will flow into the annular channel through the corresponding first sub-pressure relief channel and the second sub-pressure relief channel, then flow to the second pressure relief mechanism through the annular channel, and then be released to the exterior of the battery through the second pressure relief mechanism, which is beneficial to improving the reliability of the battery in use.

In some embodiments, the pressure relief channel includes a plurality of second sub-pressure relief channels, and the second sub-pressure relief channels are separated by the spacer elements.

By adopting the technical solution of this embodiment, the design of the plurality of second sub-pressure relief channels enables the emissions in the first sub-pressure relief mechanism to be discharged through the plurality of second sub-pressure relief channels, which is beneficial for the rapid discharge of emissions, reduces the risks such as internal pressure buildup and excessive temperature in the box body, and improves the reliability of the battery in use.

In some embodiments, the plurality of second sub-pressure relief channels are arranged at intervals along the extension direction of the first sub-pressure relief channel.

By adopting the technical solution of this embodiment, the battery cells arranged along the extension direction (X direction) of the first sub-pressure relief channel can quickly discharge the emissions released by the battery cells into the annular channel through the corresponding second sub-pressure relief channel, and finally release them to the exterior of the box body through the second pressure relief mechanism. This reduces the risks such as internal pressure buildup and excessive temperature in the box body, and is beneficial for improving the reliability of the battery in use.

In some embodiments, the first sub-pressure relief channel is perpendicular to the second sub-pressure relief channel.

By adopting the technical solution of this embodiment, the first sub-pressure relief channel and the second sub-pressure relief channel are regularly distributed, which is convenient for processing and manufacturing.

In some embodiments, the annular channel is provided with an annular element connected to the box body. The annular element is used to divide the annular channel into a first sub-annular channel and a second sub-annular channel, and the second sub-annular channel is annularly provided around the first sub-annular channel. The annular element is provided with a second ventilable structure for communicating the first sub-annular channel with the second sub-annular channel. The second sub-annular channel is connected to the second pressure relief mechanism, and the first sub-annular channel is in communication with the first sub-pressure relief channel.

By adopting the technical solution of this embodiment, the emissions released by the battery cell need to pass through the first sub-annular channel and the second sub-annular channel. In this way, the discharge path of the emissions can be extended, and the cooling time of the particulate matter in the emissions is long, which is beneficial for reducing the risk of the excessively high exhaust temperature of the battery and improving the reliability of the battery in use.

In some embodiments, the second ventilable structure is a through hole.

Through the technical solution of this embodiment, the second ventilable structure is a through hole, and the structure is simple, which is convenient for processing and manufacturing.

In some embodiments, the annular element includes at least three side wall portions connected end to end in sequence, and a side wall portion close to the second pressure relief mechanism is provided with the second ventilable structure.

By adopting the technical solution of this embodiment, the second ventilable structure is close to the second pressure relief mechanism. The emissions passing through the second ventilable structure can quickly move to the second pressure relief mechanism and then be discharged through the second pressure relief mechanism, which is beneficial for reducing the risks such as internal pressure buildup in the box body and improving the reliability of the battery in use.

In some embodiments, when the filter element is provided in the box body, the side wall portion close to the second pressure relief mechanism is the filter element, and the filter hole is the second ventilable structure.

By adopting the technical solution of this embodiment, by directly forming the filter hole on the side wall portion close to the second pressure relief mechanism, not only can the filtration of the emissions be achieved, but also the communication between the first sub-annular channel and the second sub-annular channel can be realized. The integration of the annular element and the filter element has a simple structure and is convenient for processing and manufacturing.

In some embodiments, the annular element includes at least three side wall portions connected end to end in sequence, and a side wall portion far away from the second pressure relief mechanism is provided with the second ventilable structure.

By adopting the technical solution of this embodiment, since the distance between the second ventilable structure and the second pressure relief mechanism is relatively long, the emissions passing through the second ventilable structure need to travel a certain distance to reach the second pressure relief mechanism and then be discharged out of the box body. In this way, the discharge path of the emissions can be extended, the cooling time of the particulate matter in the emissions is long, temperature of the particulate matter when it exits the box is low, which is beneficial for reducing the risk of the excessively high exhaust temperature of the battery and improving the reliability of the battery in use.

In some embodiments, the side wall portion close to the second pressure relief mechanism is the first side wall portion, and at least one of the side wall portion adjacent to the first side wall portion and the side wall portion opposite to the first side wall portion is provided with the second ventilable structure.

By adopting the technical solution of this embodiment, the second ventilable structure is designed to be far away from the second pressure relief mechanism. In this way, the discharge path of the emissions can be extended, the cooling time of the particulate matter in the emissions is long, which is beneficial for reducing the risk of the excessively high exhaust temperature of the battery.

In some embodiments, the second ventilable structure is located in the middle of the corresponding side wall portion.

By adopting the technical solution of this embodiment, the second ventilable structure is located in the middle of the side wall portion. In this way, the distance from the battery cells at two ends to the second ventilable structure is not too far, and the emissions released by the battery cells at the ends can also be quickly discharged, which is beneficial for improving the reliability of the battery in use.

In some embodiments, when the filter element is provided in the box body, the side wall portion far away from the second pressure relief mechanism is the filter element, and the filter hole is the second ventilable structure.

By adopting the technical solution of this embodiment, by directly forming the filter hole on the side wall portion far away from the second pressure relief mechanism, not only can the filtration of the emissions be achieved, but also the communication between the first sub-annular channel and the second sub-annular channel can be realized. The integration of the annular element and the filter element has a simple structure and is convenient for processing and manufacturing.

In some embodiments, when the filter element is disposed in the box body, the filter element covers the second ventilable structure.

By adopting the technical solution of this embodiment, the filter element covers the second ventilable structure, which has a simple structure and is convenient for processing and manufacturing.

In some embodiments, the filter element is located between the battery module and the second pressure relief mechanism; the filter element has a first filter portion and a second filter portion, both of which are provided with a plurality of filter holes. A first discharge path and a second discharge path are formed between the first pressure relief mechanism and the second pressure relief mechanism of the battery cell closest to the second pressure relief mechanism. The first discharge path passes through the filter holes of the first filter portion, and the second discharge path passes through the filter holes of the second filter portion. When the length of the first discharge path is greater than the length of the second discharge path, the hole diameter of the filter holes of the first filter portion is larger than the hole diameter of the filter holes of the second filter portion.

By adopting the technical solution of this embodiment, the hole diameter of the filter holes of the first filter portion is larger than the hole diameter of the filter holes of the second filter portion. In this way, the low-temperature small particulate matter in the emissions flowing along the long discharge path will directly pass through the filter holes of the first filter portion and be discharged out of the battery. At the same time, the filter holes of the first filter portion will also block the large particles with higher temperature in the emissions. Moreover, the large and small particulate matter with high temperature in the emissions flowing along the short discharge path will be blocked by the filter holes of the second filter portion and will not be discharged out of the battery. In this way, the risk of causing the excessively high exhaust temperature of the battery can be reduced, and the reliability of the battery in use can be improved. In addition, through the cooperative design of the filter holes with different sizes, the emissions can be quickly discharged out of the battery, reducing the risk of internal pressure buildup in the box body.

In some embodiments, the box body further includes a bottom plate. The partition is supported on the bottom plate by the spacer element. The battery module is located above the partition, and the first pressure relief mechanism is located at the bottom of the battery cell.

By adopting the technical solution of this embodiment, the first pressure relief mechanism is located at the bottom of the battery cell. At the same time, the battery module and the first sub-pressure relief mechanism are separated by the partition. In this way, the emissions released by the first pressure relief mechanism are unlikely to come into contact with the electrical components at the top of the battery cell, reducing the risk of damage to the battery cell and being beneficial for improving the reliability of the battery in use.

In some embodiments, the partition is a thermal management component, and the thermal management component is configured to perform heat exchange with the battery module.

Through the technical solution of this embodiment, the partition is directly a thermal management component, so there is no need to add additional components, which is beneficial for reducing the number of components of the battery and is convenient for processing and manufacturing.

In a second aspect, embodiments of the present application provide an electric device, including the battery according to any one of the above embodiments.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

DESCRIPTION OF DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. Those of ordinary skill in the art can still derive other accompanying drawings from these accompanying drawings without creative efforts.

To describe technical solutions in embodiments of the present application more clearly, the following briefly describes the accompanying drawings for describing the embodiments or the conventional technology. It is clear that the accompanying drawings described in the following are merely some embodiments of the present application. Those of ordinary skill in the art can still derive other accompanying drawings from these accompanying drawings without creative efforts.

FIG. 1 is a schematic structural diagram of an electric device provided according to an embodiment of the present application.

FIG. 2 is a schematic structural diagram of a battery provided according to an embodiment of the present application.

FIG. 3 is a schematic structural diagram of a battery cell provided according to an embodiment of the present application.

FIG. 4 is a decomposed schematic diagram of a battery provided according to another embodiment of the present application.

FIG. 5 is a schematic diagram of a partial structure of a filter element of the battery shown in FIG. 4 from one perspective.

FIG. 6 is a schematic diagram of a partial structure of a filter element of the battery shown in FIG. 4 from another perspective.

FIG. 7 is a schematic structural diagram of the battery shown in FIG. 4 from one perspective.

FIG. 8 is a sectional view taken along line A-A in FIG. 7.

FIG. 9 is a sectional view taken along line B-B in FIG. 7.

FIG. 10 is a partially enlarged view of C in FIG. 8.

FIG. 11 is a partially enlarged view of D in FIG. 8.

FIG. 12 is a schematic structural diagram of the battery shown in FIG. 4 from another perspective.

FIG. 13 is a sectional view taken along line E-E in FIG. 12.

FIG. 14 is a schematic structural diagram of a battery provided according to yet another embodiment of the present application.

FIG. 15 is a sectional view taken along line F-F in FIG. 14.

FIG. 16 is a sectional view taken along line G-G in FIG. 15.

FIG. 17 is a schematic structural diagram of a battery provided according to yet another embodiment of the present application.

FIG. 18 is a sectional view taken along line H-H in FIG. 17.

FIG. 19 is a partially enlarged view of I in FIG. 18.

FIG. 20 is a partially enlarged view of J in FIG. 18.

FIG. 21 is a partially enlarged view of K in FIG. 18.

FIG. 22 is a sectional view of the battery shown in FIG. 17.

FIG. 23 is a schematic structural diagram of a battery provided according to yet another embodiment of the present application.

FIG. 24 is a sectional view taken along line M-M in FIG. 23.

FIG. 25 is a sectional view of the battery shown in FIG. 23.

FIG. 26 is a schematic structural diagram of various battery cells provided according to embodiments of the present application.

FIG. 27 is a decomposed schematic diagram of a battery provided according to yet another embodiment of the present application.

FIG. 28 is a schematic structural diagram of the battery shown in FIG. 27 with a cap hidden.

FIG. 29 is a sectional view of the battery shown in FIG. 27.

FIG. 30 is a decomposed schematic diagram of a battery provided according to yet another embodiment of the present application.

FIG. 31 is a schematic structural diagram of the battery shown in FIG. 30 with a cap hidden.

FIG. 32 is a sectional view of the battery shown in FIG. 30.

FIG. 33 is a schematic structural diagram of a battery with a cap hidden provided according yet another embodiment of the present application.

FIG. 34 is a schematic structural diagram of a battery with a cap hidden provided according yet another embodiment of the present application.

FIG. 35 is a decomposed schematic diagram of a battery provided according to yet another embodiment of the present application.

FIG. 36 is a schematic structural diagram of the battery shown in FIG. 35 with a cap hidden.

FIG. 37 is a sectional view of the battery shown in FIG. 35.

FIG. 38 is a decomposed schematic diagram of a battery provided according to yet another embodiment of the present application.

FIG. 39 is a sectional view of the battery shown in FIG. 38.

FIG. 40 is a sectional view of the battery shown in FIG. 38.

The reference signs in the accompanying drawings are as follows:
1000, vehicle; 1100, battery; 1200, controller; 1300, motor; 10, box body; 11, first part; 12, second part; 13, cap; 14, frame; 15, bottom plate; 16, second pressure relief mechanism; 141, pressure relief hole; 101, first exhaust channel; 102, second exhaust channel; 20, battery module; 21, battery cell; 211, housing; 212, end cap; 213, electrode assembly; 214, electrode terminal; 214a, positive electrode terminal; 214b, negative electrode terminal; 215, first pressure relief mechanism; 22, end plate; 30, pressure relief channel; 31, first sub-pressure relief channel; 32, communication channel; 33, annular channel; 34, second sub-pressure relief channel; 331, first sub-annular channel; 332, second sub-annular channel; 40, filter element; 41, plate portion; 42, annular wall portion; 43, first filter portion; 44, second filter portion; 401, filter hole; 50, partition; 51, first ventilable structure; 60, spacer element; 70, annular element; 71, second ventilable structure; 72, side wall portion; 73, first side wall portion; and 80, enclosure element.

DESCRIPTION OF EMBODIMENTS

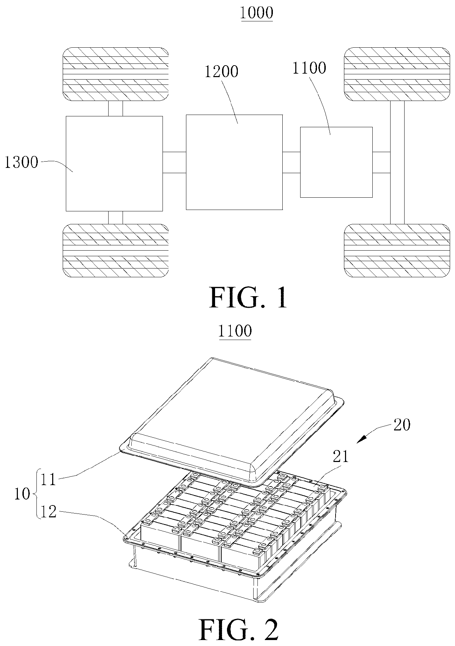

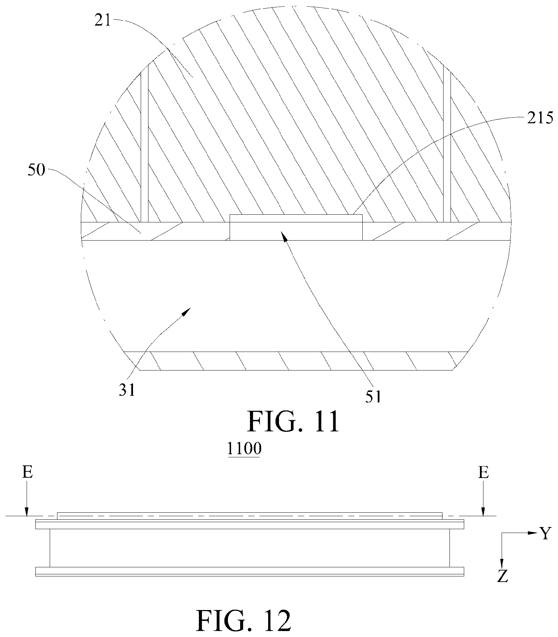

The embodiments of the present application will be described in detail below. The examples of the embodiments are shown in FIGS. 1-40, in which the same or similar reference numerals denote the same or similar elements or elements with the same or similar functions throughout. The embodiments described below with reference to FIGS. 1-40 are exemplary and are intended to explain the present application, and should not be construed as limiting the present application.

In the description of the present application, it should be understood that the orientation or positional relationship indicated by the terms such as "length", "width", "upper", "lower", "front", "rear", "left", "right", "vertical", "horizontal", "top", "bottom", "inner" and "outer" is based on the orientation or positional relationship shown in the drawings, only to facilitate the description of the present application and simplify the description, rather than to indicate or imply that the referred device or element must have a specific orientation, be constructed and operated in a specific orientation, and therefore cannot be understood as a limitation to the present application.

In addition, the terms "first" and "second" are only used for descriptive purposes, and should not be construed as indicating or implying relative importance or implicitly indicating the number of technical features indicated. Thus, the features defined as "first" and "second" may explicitly or implicitly include one or more of these features. In the description of the present application, the meaning of "a plurality of" is two or more, unless otherwise specifically defined.

In the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art can understand specific meanings of these terms in the present application according to specific situations.

In the description of the present application, it should be noted that the term "and/or" merely describes an association relationship of associated objects, indicating that three relationships may exist, for example, A and/or B may mean that A exists alone, A and B exist simultaneously, or B exists alone.

It should also be noted that, in the embodiments of the present application, the same components or the same parts are denoted by the same reference signs, for the same parts in the embodiments of the present application, only one of the parts or components may be denoted by the reference signs in the drawings, and it should be understood that the same reference signs apply to the other same parts or components.

In the present application, the terms "one embodiment", "some embodiments", "examples", "specific examples", or "some examples" and the like mean that specific features, structures, materials, or characteristics described in conjunction with the embodiment or example are included in at least one embodiment or example of the present application. In this specification, the schematic representations of the above terms are not necessarily directed to the same embodiment or example. Moreover, the described specific features, structures, materials, or characteristics may be combined in a suitable manner in any one or more embodiments or examples. In addition, those skilled in the art can incorporate and combine the different embodiments or examples described in this specification and the features of different embodiments or examples without conflicting with each other.

In the description of the embodiments of the present application, the term "a plurality of" means two or more (including two), and similarly, the term "a plurality of groups" means two or more groups (including two groups), and the term "a plurality of pieces" means two or more pieces (including two pieces). The meaning of "at least one" is one or more, unless otherwise specifically defined.

In the present application, for convenience of description, a Z axis in the drawings indicates an up-down direction, a positive direction of the Z axis indicates an up direction, and a negative direction of the Z axis indicates a down direction; a Y axis in the drawings indicates a front-rear direction, a positive direction of the Y axis indicates a rear direction, and a negative direction of the Y axis indicates a front direction; and an X axis in the drawings indicates a left-right direction, a positive direction of the X axis indicates a right direction, and a negative direction of the X axis indicates a left direction.

A battery mentioned in the embodiments of the present application refers to a single physical module including one or a plurality of battery cells to provide a higher voltage and capacity. The battery generally includes a box body for encapsulating one or more battery cells. The box body can prevent liquids or other foreign objects from affecting the charging or discharging of the battery cells.

In the embodiments of the present application, the battery cell may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cell is generally classified into three types according to a packaging manner, that is, a cylindrical battery cell, a square battery cell, and a soft-pack battery cell, which is not limited in the embodiments of the present application.

The battery cell includes an electrode assembly and an electrolyte solution. The electrode assembly is composed of a positive electrode plate, a negative electrode plate and a separator. Working of the battery cell mainly relies on migration of metal ions between the positive electrode plate and the negative electrode plate.

In the development of battery technologies, various design factors, for example, performance parameters such as energy density, cycle life, discharge capacity, and charge/discharge rate are simultaneously taken into consideration. In addition, the reliability of the battery in use needs to be taken into consideration.

For the battery cell, the main safety hazards come from the charging and discharging processes, as well as the design of a suitable ambient temperature. In order to effectively avoid unnecessary losses, there are generally at least three protective measures for the battery cell. In particular, the protective measures include at least a switching element, selection of an appropriate separator material, and a first pressure relief mechanism.

The first pressure relief mechanism refers to an element or component that is actuated to release the internal pressure or temperature when the internal pressure, temperature, or other conditions of the battery cell reach a predetermined threshold. The threshold design varies according to different design requirements. The threshold may depend on one or more of the materials of the positive electrode plate, the negative electrode plate, the electrolyte, and the separator in the battery cell. The first pressure relief mechanism can take the form of an explosion-proof valve, a gas valve, a pressure relief valve, or a safety valve, etc., and can specifically adopt a pressure-sensitive or temperature-sensitive element or structure. That is, when the internal pressure, temperature, or other conditions of the battery cell reach a predetermined threshold, the first pressure relief mechanism performs an action, or the weak structure provided in the first pressure relief mechanism is damaged, thereby forming a channel for releasing the internal pressure or temperature.

The term "actuated" mentioned in the embodiments of the present application means that the first pressure relief mechanism generates an action or is activated to a certain state, so that the internal pressure and temperature of the battery cell can be released, so that the internal pressure and temperature of the battery cell can be released. The actions generated by the first pressure relief mechanism may include but are not limited to: at least a portion of the first pressure relief mechanism breaks, shatters, melts, is torn, or opens, and so on. When the first pressure relief mechanism is actuated, the emissions inside the battery cell will be discharged outward from the actuated portion as emissions. In this way, the battery cell can release pressure and temperature under controllable pressure or temperature conditions, thereby avoiding the occurrence of potential more serious accidents.

When the first pressure relief mechanism is actuated, the high-temperature and high-pressure substances inside the battery cell will be discharged outward from the actuated portion as emissions. In this way, the battery cell can release pressure and temperature under controllable pressure or temperature conditions, thereby avoiding the occurrence of potential more serious accidents.

The emissions from the battery cell mentioned in the embodiments of the present application include but are not limited to: electrolyte solution, dissolved or split positive and negative electrode plates, fragments of the separator, high-temperature and high-pressure gas generated by the reaction, flames, and so on.

Generally, the emissions released by the battery cell spread inside the box body of the battery. The box body is provided with a second pressure relief mechanism. Through the actuation of the second pressure relief mechanism, the emissions are discharged outward from the actuated portion of the box body, reducing the further deterioration of the thermal runaway of the battery. However, the emissions ejected from the battery often carry high-temperature particulate matter generated by the thermal runaway of the battery cell. When the high-temperature particulate matter is ejected from the battery, the exhaust temperature of the battery is too high, which is likely to cause the deterioration of the external environment of the battery and seriously affect the reliability of the battery in use. The action principles of the first pressure relief mechanism and the second pressure relief mechanism are similar, and will not be repeated here.

Based on this, in order to improve the reliability in use, the embodiments of the present application provide a battery. When the thermal runaway occurs in the battery cell in the battery, the first pressure release mechanism is activated, the emissions generated in the battery cell are released into the pressure release channel by the first pressure release mechanism and move to the second pressure release mechanism along the pressure release channel, and as the thermal runaway continues to be intensified, the second pressure release mechanism is activated, the emissions in the pressure release channel are released into the exterior of the box body by the second pressure release mechanism, and in this process, since at least one of the battery cell, the battery module, the box body and the pressure release channel is provided with the filter, the filter holes of the filter can block high-temperature particulate matter in the emissions, so that the high-temperature particulate matter ejected from the battery is reduced, which is advantageous in reducing the risk of the excessively high exhaust temperature of the battery and improving the reliability of the battery in use.

For a battery and an electric device using the battery as a power source disclosed in the embodiments of the present application, the electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 1100 is provided inside the vehicle 1000, and the battery 1100 may be provided at the bottom, the head, or the tail of the vehicle 1000. The battery 1100 may be used to power the vehicle 1000, for example, the battery 1100 may be used as an operating power source of the vehicle 1000. The vehicle 1000 may further include a controller 1200 and a motor 1300, and the controller 1200 is used to control the battery 1100 to power the motor 1300, for example, for the working power requirement for the vehicle 1000 during starting, navigating and driving.

In some embodiments of the present application, the battery 1100 may be used not only as the operating power source of the vehicle 1000, but also as a driving power source of the vehicle 1000, instead of or partially instead of fuel or natural gas to provide driving power for the vehicle 1000.

Referring to FIG. 2, as an example of the battery 1100, the battery 1100 includes a box body 10 and a battery module 20, and the battery module 20 is accommodated in the box body 10. Here, the box body 10 is used for providing an accommodation space for the battery cell 21, and the box body 10 may have various structures. In some embodiments, the box body 10 may include a first part 11 and a second part 12, and the first part 11 and the second part 12 fit to each other to define an accommodation space for accommodating the battery cell 21. The second part 12 may be a hollow structure with an opening at one end, the first part 11 may be a plate-shaped structure, and the first part 11 covers an opening side of the second part 12, so that the first part 11 and the second part 12 jointly define the accommodation space. The first part 11 and the second part 12 each may be a hollow structure with an opening at one end, and an opening side of the first part 11 covers an opening side of the second part 12. Of course, the box body 10 formed by the first part 11 and the second part 12 may be in various shapes such as cylinder, cuboid, and the like.

In another embodiment, the box body 10 may further include a cap 13, a frame 14, and a bottom plate 15, and the cap 13 and the bottom plate 15 are mounted on upper and lower sides of the frame 14, respectively, thereby defining an accommodation space for accommodating the battery cells.

In the battery module 20, the battery module 20 includes one or more battery cells 21. A plurality of battery cells 21 may be subjected to series connection, parallel connection or series-parallel connection. The series-parallel connection means that the plurality of battery cells 21 are subjected to both series connection and parallel connection.

In an embodiment, the plurality of battery cells 21 may be directly subjected to series connection, parallel connection, or series-parallel connection, and then the battery module 20 composed of the plurality of battery cells 21 is accommodated in the box body 10; and certainly, a plurality of battery modules 20 are then integrated by series connection, parallel connection or series-parallel connection and accommodated in the box body 10. The battery 1100 may further include other structures. For example, the battery 1100 may further include a current converging component for implementing an electrical connection between the plurality of battery cells 21. Here, each battery cell 21 may be a secondary battery or a primary battery, or may be a lithium-sulfur battery, a sodium-ion battery, or a magnesium-ion battery, but is not limited thereto. The battery cell 21 may be in the shape of cylinder, flat body, rectangular cuboid, etc.

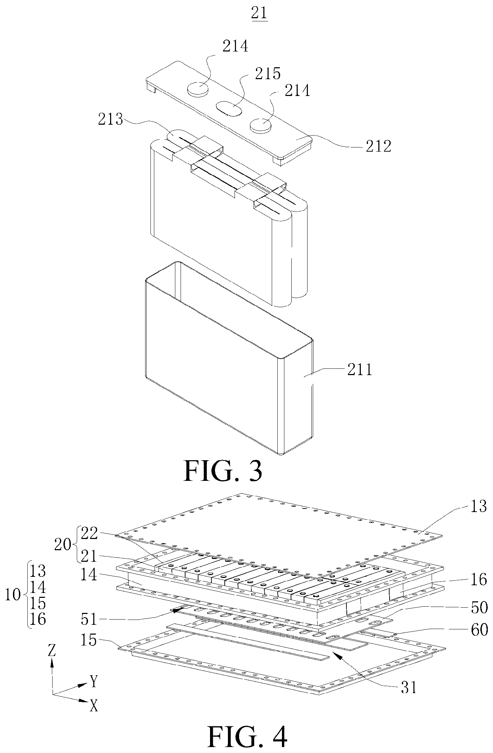

Referring to FIG. 3, FIG. 3 is a schematic diagram of a decomposed structure of a battery cell 21 according to some embodiments of the present application. The battery cell 21 refers to a minimum unit constituting a battery. As shown in FIG. 3, the battery cell 21 includes a shell, an electrode assembly 213, and other functional components. Illustratively, the shell includes an end cap 212 and a housing 211.

The end cap 212 is a component that covers the opening of the housing 211 to insulate an internal environment of the battery cell 21 from an external environment. Without limitation, the shape of the end cap 212 may adapt to the shape of the housing 211 to fit the housing 211. In an embodiment, the end cap 212 may be made of a material with certain hardness and strength (e.g., aluminum alloy). As such, the end cap 212 is less prone to deformation under compressive impact, thereby enabling the battery cell 21 to have higher structural strength and improved safety performance. The end cap 212 may be provided with a functional component such as an electrode terminal 214. The electrode terminal 214 may be used to be electrically connected to the electrode assembly 213 for outputting electric energy from or inputting electric energy into the battery cell 21. In some embodiments, a first pressure relief mechanism 215 for relieving internal pressure may be further provided on the end cap 212 when the internal pressure or temperature of the battery cell 21 reaches a threshold value. The end cap 212 may be made of various materials, such as copper, iron, aluminum, stainless steel, aluminum alloy, plastic, etc. The embodiments of the present application impose no special limitations thereto. In some embodiments, an insulation piece may be further provided on an inner side of the end cap 212, and the insulation piece may be used to isolate an electrical connection component in the housing 211 from the end cap 212 to reduce a risk of a short circuit. For example, the insulation piece may be plastic, rubber, etc.

The housing 211 is a component configured to cooperate with the end cap 212 to form an internal environment of the battery cell 21, where the formed internal environment may be used to accommodate the electrode assembly 213, an electrolyte solution and other components. The housing 211 and the end cap 212 may be separate components, and an opening may be provided in the housing 211, and the inner environment of the battery cell 21 may be formed by closing the end cap 212 at the opening. Without limitation, the end cap 212 and the housing 211 may also be integrated. In an embodiment, the end cap 212 and the housing 211 may form a joint connection surface before other components are fitted into the box body, and then the end cap 212 is enabled to cover the housing 211 when an interior of the housing 211 needs to be enclosed. The housing 211 may be in various shapes and various dimensions, such as cuboid, cylinder, hexagonal prism, and the like. In an embodiment, the shape of the housing 211 may be determined based on a specific shape and dimension of the electrode assembly 213. The housing 211 may be made of various materials, such as copper, iron, aluminum, stainless steel, aluminum alloy, plastic, and the like. This is not specially limited in the embodiments of the present application.

The electrode assembly 213 is a component in the battery cell 21 in which an electrochemical reaction occurs. The housing 211 may include one or more electrode assemblies 213. The electrode assembly 213 includes a positive electrode, a negative electrode and a spacer. During charge and discharge of the battery cell, intercalation/de-intercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode and negative electrode may be a positive plate which may include a positive current collector and a positive active material disposed on at least one surface of the positive current collector.

In some embodiments, the negative electrode may be a negative electrode plate, which may include a negative electrode current collector and a negative electrode active material provided on at least one surface of the negative electrode current collector.

In some implementations, the spacer is a separator. The type of the separator is not particularly limited in this application, and any well-known porous separator with good chemical stability and mechanical stability may be used.

In some implementations, the electrode assembly 213 has a wound structure. The positive electrode plate and the negative electrode plate are wound into a wound structure.

In some other implementations, the electrode assembly 213 has a laminated structure.

As shown in FIGS. 4-8, in one embodiment of the present application, a battery 1100 is provided. The battery 1100 includes a box body 10, a battery module 20 and a pressure relief channel 30. The battery module 20 is located inside the box body 10. The battery module 20 includes at least one battery cell 21, and each battery cell 21 is provided with a first pressure relief mechanism 215. The box body 10 has a second pressure relief mechanism 16. The pressure relief channel 30 connects the first pressure relief mechanism 215 of at least one battery cell 21 with the second pressure relief mechanism 16. The first pressure relief mechanism 215 is used to release the emissions generated inside the battery cell 21 into the pressure relief channel 30 under actuation. The pressure relief channel 30 is used to guide the emissions to the second pressure relief mechanism 16. The second pressure relief mechanism 16 is used to release the emissions in the pressure relief channel 30 to the exterior of the box body 10 under actuation. At least one of the battery cell 21, the battery module 20, the box body 10 and the pressure relief channel 30 is provided with a filter element 40. The filter element 40 is provided with filter holes 401 for blocking the passage of particulate matter in the emissions.

When the first pressure relief mechanism 215 is actuated, it can release the emissions generated by the thermal runaway of the battery cell 21 to the exterior of the battery cell 21. As shown in FIG. 3, in the normal use state of the battery cell 21, the first pressure relief mechanism 215 can be provided on the top of the battery cell 21, that is, on the end cap 212 of the battery cell 21. The first pressure relief mechanism 215 can also be provided on the side wall of the housing 211 of the battery cell 21 or the first pressure relief mechanism 215 can also be provided on the bottom of the battery cell 21.

When the second pressure relief mechanism 16 is actuated, it can release the emissions released by the battery cell 21 into the pressure relief channel 30 to the exterior of the box body 10. The second pressure relief mechanism 16 can be provided on the cap 13, the frame 14 or the bottom plate 15 of the box body 10.

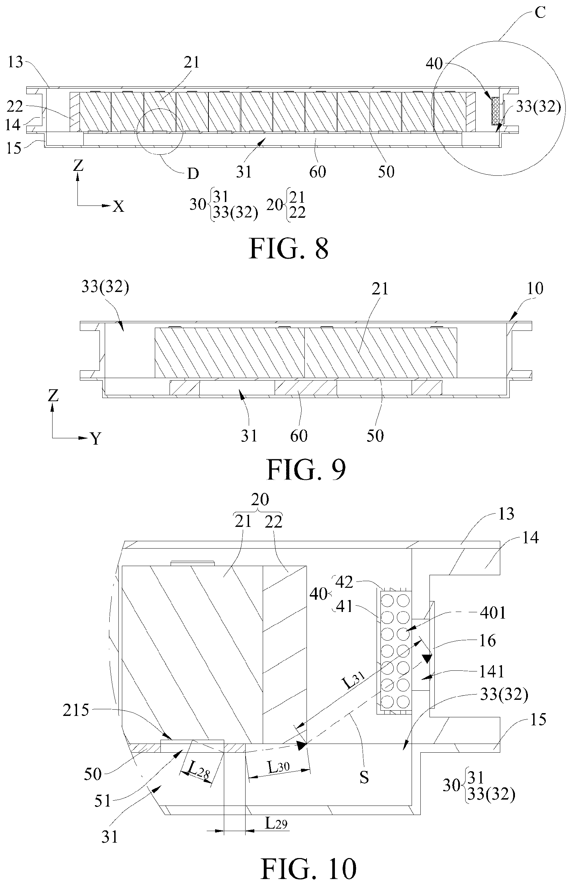

The pressure relief channel 30 can refer to a passage or space through which the emissions move during the process from the release of the emissions by the first pressure relief mechanism 215 after actuation to the second pressure relief mechanism 16. For example, as shown in FIGS. 8-10, the pressure relief channel 30 is located inside the box body 10. That is, the pressure relief channel 30 can be a portion of the accommodation space enclosed by the box body 10. The portion can share the same space with the battery cell 21, or it can be two separate spaces from the space where the battery cell 21 is located. The pressure relief channel 30 and the battery cell 21 are in two separate spaces respectively. In this way, the emissions can be separated from the battery cell 21, which improves the reliability of the battery 1100.

The pressure relief channel 30 connects the first pressure relief mechanism 215 of at least one battery cell 21 with the second pressure relief mechanism 16. It can be understood that when the first pressure relief mechanism 215 and the second pressure relief mechanism 16 connected to the pressure relief channel 30 are actuated simultaneously, the pressure relief channel 30 can connect the corresponding first pressure relief mechanism 215 and the second pressure relief mechanism 16, so that the emissions released by the first pressure relief mechanism 215 can move to the second pressure relief mechanism 16 and be discharged out of the battery 1100 through the second pressure relief mechanism 16. In addition, when the number of battery cells 21 is one, the pressure relief channel 30 connects the first pressure relief mechanism 215 and the second pressure relief mechanism 16 of this battery cell 21. When the number of battery cells 21 is plural, the number of battery cells 21 connected to the pressure relief channel 30 includes but is not limited to one, two, three or four.

The filter element 40 can refer to a component provided with filter holes 401, and the filter holes 401 can be a hole structure capable of blocking the passage of particulate matter in the emissions.

At least one of the battery cell 21, the battery module 20, the box body 10 and the pressure relief channel 30 is provided with a filter element 40. It can be understood that the filter element 40 can be provided on any one of the battery cell 21, the battery module 20, the box body 10 and the pressure relief channel 30; the filter element 40 can also be provided on any two of the battery cell 21, the battery module 20, the box body 10 and the pressure relief channel 30; the filter element 40 can also be provided on any three of the battery cell 21, the battery module 20, the box body 10 and the pressure relief channel 30; the battery cell 21, the battery module 20, the box body 10 and the pressure relief channel 30 are all provided with the filter element 40. The filter element 40 provided on the battery cell 21 can block the particulate matter in the emissions released by the battery cell 21 from entering the pressure relief channel 30. The filter element 40 provided on the battery module 20 can block the particulate matter in the emissions released by the battery cells 21 in the battery module 20 from entering the pressure relief channel 30 or moving to the second pressure relief mechanism 16. The filter element 40 provided in the pressure relief channel 30 can block the particulate matter in the emissions released by the battery cell 21 from moving to the second pressure relief mechanism 16. The filter element 40 provided on the box body 10 can block the particulate matter in the pressure relief channel 30 from being discharged out of the battery 1100. All these methods can reduce the high-temperature particulate matter discharged by the battery 1100.

In the battery 1100 according to the embodiment of the present application, when the thermal runaway occurs in the battery cell 21 in the battery 1100, the first pressure release mechanism 215 is activated, the emissions generated in the battery cell 21 are released into the pressure release channel 30 by the first pressure release mechanism 215 and move to the second pressure release mechanism 16 along the pressure release channel 30, and as the thermal runaway continues to be intensified, the second pressure release mechanism 16 is activated, the emissions in the pressure release channel 30 are released into the exterior of the box body 10 by the second pressure release mechanism 16, and in this process, since at least one of the battery cell 21, the battery module 20, the box body 10 and the pressure release channel 30 is provided with the filter element 40, the filter holes 401 of the filter element 40 can block the passage of high-temperature particulate matter in the emissions, thereby reducing the high-temperature particulate matter ejected from the battery 1100, which is advantageous in reducing the risk of excessively high exhaust temperature of the battery 1100 and improving the reliability of the battery 1100 in use.

In another embodiment of the present application, when the filter element 40 is provided on the battery cell 21, the first pressure relief mechanism 215 and the filter element 40 have an integrated structure.

The first pressure relief mechanism 215 is integrated with the filter element 40 to form an integral structure, where the first pressure relief mechanism 215 and the filter element 40 may be connected to form an integral structure by means of screwing, clamping, welding, bonding or the like.

By adopting the technical solution of this embodiment, the first pressure relief mechanism 215 and the filter element 40 form an integral structure, and this integral structure can be mounted on the battery cell 21 together, which is convenient and simple for assembly.

In another embodiment of the present application, when the filter element 40 is provided on the battery cell 21, the filter element 40 is connected to the shell of the battery cell 21.

The filter element 40 is fixedly connected to the housing 211 of the battery cell 21, where the filter element 40 can be fixed on the housing 211 by means of screwing, clamping, welding, bonding or the like.

By adopting the technical solution of this embodiment, the filter element 40 is directly connected to the housing 211, the connecting structure is simple, and the assembly operation is simple.

In another embodiment of the present application, when the filter element 40 is provided on the box body 10, the second pressure relief mechanism 16 and the filter element 40 have an integrated structure.

The second pressure relief mechanism 16 is integrated with the filter element 40 to form an integral structure, where the second pressure relief mechanism 16 and the filter element 40 may be connected to form an integral structure by means of screwing, clamping, welding, bonding or the like.

By adopting the technical solution of this embodiment, the second pressure relief mechanism 16 and the filter element 40 form an integral structure, and this integral structure can be mounted on the box body 10, which is convenient and simple for assembly.

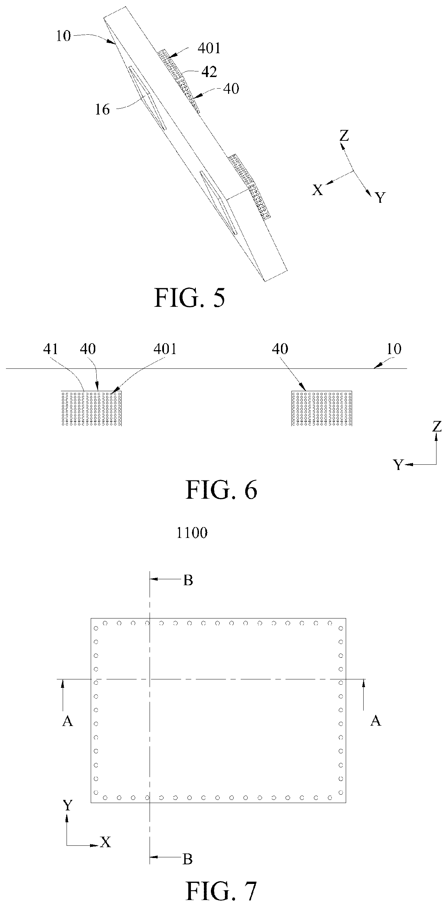

In another embodiment of the present application, as shown in FIG. 5 and FIG. 6, when the filter element 40 is provided on the box body 10, the filter element 40 is connected to the box body 10.

The filter element 40 is fixedly connected to the box body 10, where the filter element 40 can be fixed on the box body 10 by means of screwing, clamping, welding, bonding or the like.

By adopting the technical solution of this embodiment, the filter element 40 is directly connected to the box body 10, the connection operation is simple, and it is convenient for manufacturing.

In another embodiment of the present application, when the filter element 40 is provided on the box body 10, the side wall of the box body 10 is provided with filter holes 401, and the portion of the side wall of the box body 10 provided with the filter holes 401 forms the filter element 40.

The filter holes 401 are directly provided on the side wall of the box body 10, so that the portion of the side wall of the box body 10 provided with the filter holes 401 directly serves as the filter element 40, where at least one of the front, rear, left, right, upper and lower side walls of the box body 10 is provided with the filter holes 401.

By adopting the technical solution of this embodiment, the portion of the side wall of the box body 10 provided with the filter holes 401 directly serves as the filter element 40. In this way, there is no need to additionally add a filter component, which is beneficial to simplifying the structure of the box body 10 and reducing the manufacturing cost.

In another embodiment of the present application, as shown in FIG. 8, when the filter element 40 is provided on the box body 10, a filter element 40 is provided on the side of the second pressure relief mechanism 16 facing the battery module 20 to block the particulate matter released by the battery cell 21 from entering the second pressure relief mechanism 16.

The filter element 40 is provided on the side of the second pressure relief mechanism 16 facing the battery module 20. It can be understood that the filter element 40 is located inside the box body 10, and the filter element 40 is not exposed outside the box body 10, so the filter element 40 has better reliability in use.

By adopting the technical solution of this embodiment, the particulate matter in the emissions is first filtered out by the filter element 40 and then discharged out of the battery 1100 through the second pressure relief mechanism 16, thereby reducing the high-temperature particulate matter discharged by the battery 1100 and improving the reliability of the battery 1100 in use. In addition, the probability of the particulate matter coming into contact with the external environment of the box body 10 is small, and the risk of causing the excessively high exhaust temperature of the battery 1100 is small, which can better improve the reliability of the battery 1100.

In another embodiment of the present application, when the filter element 40 is provided on the box body 10, a filter element 40 is provided on the side of the second pressure relief mechanism 16 facing away from the battery module 20 to block the particulate matter released by the second pressure relief mechanism 16 from passing through.

The filter element 40 is provided on the side of the second pressure relief mechanism 16 facing away from the battery module 20. It can be understood that the filter element 40 is located on the side of the second pressure relief mechanism 16 exposed outside the box body 10, that is, the filter element 40 is exposed outside the box body 10.

By adopting the technical solution of this embodiment, the emissions are first passed through the second pressure relief mechanism 16 and then the particulate matter is filtered out by the filter element 40 and discharged to the exterior of the battery 1100, thereby reducing the particulate matter discharged by the battery 1100 and improving the reliability of the battery 1100 in use.

In another embodiment of the present application, when the filter element 40 is provided on the box body 10, a filter element 40 is provided on the side of the second pressure relief mechanism 16 facing the battery module 20 to block the particulate matter released by the battery cell 21 from entering the second pressure relief mechanism 16; and a filter element 40 is provided on the side of the second pressure relief mechanism 16 facing away from the battery module 20 to block the particulate matter released by the second pressure relief mechanism 16 from passing through.

By adopting the technical solution of this embodiment, the emissions are filtered by two filter elements 40, and the particulate matter filtering effect is good, which is beneficial to reducing the particulate matter discharged by the battery 1100 and improving the reliability of the battery 1100 in use.

In another embodiment of the present application, the sum of the cross-sectional areas of all the filter holes 401 of the filter element 40 is the filtration area. When a filter element 40 is provided on the side of the second pressure relief mechanism 16 facing the battery module 20, the filter element 40 on the side of the second pressure relief mechanism 16 facing the battery module 20 is the first filter element, and the filtration area of the first filter element is larger than the maximum pressure relief area of the second pressure relief mechanism 16. When a filter element 40 is provided on the side of the second pressure relief mechanism 16 facing away from the battery module 20, the filter element 40 on the side of the second pressure relief mechanism 16 facing away from the battery module 20 is the second filter element, and the filtration area of the second filter element is smaller than the maximum pressure relief area of the second pressure relief mechanism 16.

The filtration area can refer to the sum of the cross-sectional areas of all the filter holes 401 on the filter element 40, that is, the total area on the filter element 40 through which the emissions can pass, where the cross-sectional area refers to the area of the figure obtained by cutting the filter hole 401 with a plane perpendicular to the axis of the filter hole 401.

The first filter element can refer to the filter element 40 located on the side of the second pressure relief mechanism 16 facing the battery cell 21. The emissions released by the battery cell 21 pass through the first filter element and then are discharged through the second pressure relief mechanism 16, that is, the first filter element and the second pressure relief mechanism 16 are arranged in sequence along the discharge path of the emissions.

The maximum pressure relief area of the second pressure relief mechanism 16 can refer to the maximum flow area through which the emissions pass through the second pressure relief mechanism 16 when the second pressure relief mechanism 16 is in a fully open state. Illustratively, the second pressure relief mechanism 16 is an explosion-proof sheet, and the box body 10 is usually provided with a pressure relief hole 141, and the explosion-proof sheet shields the pressure relief hole 141. When the explosion-proof sheet is completely damaged, if the area of the damaged area of the explosion-proof sheet is smaller than the cross-sectional area of the pressure relief hole 141, the area of the damaged area of the explosion-proof sheet is the maximum pressure relief area of the second pressure relief mechanism 16. Alternatively, if the area of the damaged area of the explosion-proof sheet is larger than the cross-sectional area of the pressure relief hole 141, the cross-sectional area of the pressure relief hole 141 is the maximum pressure relief area of the second pressure relief mechanism 16. When the explosion-proof sheet is completely separated from the box body 10, the cross-sectional area of the pressure relief hole 141 is the maximum pressure relief area of the second pressure relief mechanism 16. The second pressure relief mechanism 16 is an explosion-proof valve, and the maximum pressure relief area in the technical specification of the explosion-proof valve is the maximum pressure relief area of the second pressure relief mechanism 16. When the maximum pressure relief area is not recorded in the technical specification of the explosion-proof valve, the maximum pressure relief area of the second pressure relief mechanism 16 can refer to the maximum flow area through which the emissions flow through the explosion-proof valve when the explosion-proof valve is in a fully open state.

The second filter element can refer to the filter element 40 located on the side of the second pressure relief mechanism 16 facing away from the battery cell 21. The emissions released by the battery cell 21 pass through the second pressure relief mechanism 16 and then are filtered by the second filter element and discharged, that is, the second pressure relief mechanism 16 and the second filter element are arranged in sequence along the discharge path of the emissions.

The filtration area of the first filter element is larger than the maximum pressure relief area of the second pressure relief mechanism 16. It can be understood that during the process of the emissions flowing through the first filter element and the second pressure relief mechanism 16 in sequence, the flow area of the emissions decreases in sequence, which can achieve the effect of step-by-step pressure relief, is beneficial to improving the emission effect of the emissions, and improves the reliability of the battery 1100 in use.

The filtration area of the second filter element is smaller than the maximum pressure relief area of the second pressure relief mechanism 16. It can be understood that during the process of the emissions flowing through the second pressure relief mechanism 16 and the second filter element in sequence, the flow area of the emissions decreases in sequence, which can achieve the effect of step-by-step pressure relief, is beneficial to improving the emission effect of the emissions, and improves the reliability of the battery 1100 in use.

By adopting the technical solution of this embodiment, the flow area of the emissions decreases along the discharge path, which can achieve the effect of step-by-step pressure relief, is beneficial to improving the emission effect of the emissions, and improves the reliability of the battery 1100 in use. In addition, the gradual decrease of the flow area is also beneficial to reducing design redundancy and reducing the manufacturing cost.

In another embodiment of the present application, a plurality of first filter elements are provided on the side of the second pressure relief mechanism 16 facing the battery module 20, the plurality of first filter elements are arranged in sequence along the discharge path of the emissions released by the battery cell 21, and the filtration areas of the plurality of first filter elements decrease along the discharge path of the emissions. When a plurality of second filter elements are provided on the side of the second pressure relief mechanism 16 facing away from the pressure relief channel 30, the plurality of second filter elements are arranged in sequence along the discharge path of the emissions released by the second pressure relief mechanism 16, and the filtration areas of the plurality of second filter elements decrease along the discharge path of the emissions.

The plurality of first filter elements are provided on the side of the second pressure relief mechanism 16 facing the battery module 20, and the plurality of first filter elements are arranged in sequence along the discharge path of the emissions. The discharge path can refer to the flow path of the emissions in the pressure relief channel 30, so that the emissions released by the battery cell 21 can pass through each first filter element in sequence and then be discharged through the second pressure relief mechanism 16. In this way, the emissions are discharged after being filtered by a plurality of layers, which is beneficial to reducing the number of particulate matters discharged by the battery 1100 and improving the reliability of the battery 1100 in use. In addition, the filtration areas of the plurality of first filter elements decrease along the discharge path of the emissions. It can be understood that the filtration areas of the first filter elements along the discharge path of the emissions can become smaller and smaller, or decrease step by step, that is, there is a situation where the filtration areas of two adjacent first filter elements are the same. The emissions flow to the second pressure relief mechanism 16 after passing through the first filter elements with smaller and smaller filtration areas. In this way, the flow area of the emissions becomes smaller and smaller, which can realize the multi-stage pressure relief of the emissions, the emission effect of the emissions is good, and it is beneficial to improving the reliability of the battery 1100 in use.

The plurality of second filter elements are provided on the side of the second pressure relief mechanism 16 facing away from the battery module 20, and the plurality of second filter elements are arranged in sequence along the discharge path of the emissions. In this way, the emissions released by the second pressure relief mechanism 16 pass through each first filter element in sequence and then are discharged out of the battery 1100. In this way, the emissions are discharged after being filtered by a plurality of layers, which is beneficial to reducing the number of particulate matters discharged by the battery 1100 and improving the reliability of the battery 1100 in use. In addition, the filtration areas of the plurality of second filter elements decrease along the discharge path of the emissions. It can be understood that the filtration areas of the second filter elements along the discharge path of the emissions can become smaller and smaller, or decrease step by step, that is, there is a situation where the filtration areas of two adjacent second filter elements are the same. The emissions are discharged out of the battery 1100 after passing through the second filter elements with smaller and smaller filtration areas. In this way, the flow area of the emissions becomes smaller and smaller, which can realize the multi-stage pressure relief of the emissions, the emission effect of the emissions is good, and it is beneficial to improving the reliability of the battery 1100 in use.

By adopting the technical solution of this embodiment, multi-stage filtration of the emissions can be realized, which is beneficial to reducing the number of particulate matter emissions. At the same time, multi-stage pressure relief of the emissions can also be realized, the emission effect of the emissions is good, and it is beneficial to improving the reliability of the battery 1100 in use.

In another embodiment of the present application, when the plurality of first filter elements are provided on the side of the second pressure relief mechanism 16 facing the battery module 20, the hole diameters of the filter holes 401 of the plurality of first filter elements decrease along the discharge path of the emissions. When the plurality of second filter elements are provided on the side of the second pressure relief mechanism 16 facing away from the pressure relief channel 30, the hole diameters of the filter holes 401 of the plurality of second filter elements decrease along the discharge path of the emissions.

The hole diameter of the filter hole 401 can refer to the radial dimension of the filter hole 401. Illustratively, if the filter hole 401 is a circular hole, the hole diameter refers to the diameter of the circular hole.

Generally, the larger the hole diameter of the filter hole 401, the larger the size of the particulate matter that can pass through the filter hole 401. The smaller the hole diameter of the filter hole 401, the smaller the size of the particulate matter that can pass through the filter hole 401.

The hole diameters of the filter holes 401 of the plurality of first filter elements decrease along the discharge path of the emissions. It can be understood that the emissions first pass through the first filter element with a larger hole diameter and then through the first filter element with a smaller hole diameter. In this way, the large particulate matter in the emissions can be filtered out first, and then the small particulate matter in the emissions can be filtered out. Such step-by-step filtration is beneficial to reducing the risk of blockage of the filter element 40, reducing the risk of poor pressure relief, and improving the reliability of the battery 1100 in use.

The hole diameters of the filter holes 401 of the plurality of second filter elements 40 decrease along the discharge path of the emissions. It can be understood that the emissions first pass through the second filter element 40 with a larger hole diameter and then through the second filter element 40 with a smaller hole diameter. In this way, the large particulate matter in the emissions can be filtered out first, and then the small particulate matter in the emissions can be filtered out. Such step-by-step filtration is beneficial to reducing the probability of blockage of the filter element 40, reducing the risk of poor pressure relief, and improving the reliability of the battery 1100 in use.

In another embodiment of the present application, as shown in FIG. 10, the filter element 40 and the second pressure relief mechanism 16 are disposed at an interval.

The filter element 40 and the second pressure relief mechanism 16 are disposed at an interval. It can be understood that there is a certain space between the second pressure relief mechanism 16 and the filter element 40, and this space can be used to provide an operating space for the actuation of the second pressure relief mechanism 16, reducing the risk of interference. The size of the space can be set according to the operating space of the second pressure relief mechanism 16, and it is not limited here.

By adopting the technical solution of this embodiment, the risk of interference between the second pressure relief mechanism 16 and the filter element 40 can be reduced.

In another embodiment of the present application, as shown in FIG. 5 and FIG. 6, the filter element 40 includes a plate portion 41 and an annular wall portion 42 annularly provided around the plate portion 41. One end of the annular wall portion 42 is connected to the plate portion 41, and the other end of the annular wall portion 42 is connected to the box body 10. The annular wall portion 42 is annularly provided around the second pressure relief mechanism 16, and at least one of the annular wall portion 42 and the plate portion 41 is provided with filter holes 401.

As shown in FIG. 5 and FIG. 6, the filter element 40 is in the shape of a square cylinder. The plate portion 41 can refer to the bottom portion of the cylinder of the filter element 40, and the annular wall portion 42 can refer to the side wall portion 72 of the cylinder of the filter element 40. The shape of the annular wall portion 42 can be various, e.g. circular, square, elliptical, etc. The annular wall portion 42 is annularly provided around the second pressure relief mechanism 16, so that the filter element 40 covers the second pressure relief mechanism 16, thereby filtering out the particulate matter in the emissions.

At least one of the annular wall portion 42 and the plate portion 41 is provided with filter holes 401. It can be understood that the annular wall portion 42 is provided with filter holes 401, or the plate portion 41 is provided with filter holes 401, or both the annular wall portion 42 and the plate portion 41 are provided with filter holes 401. In this way, the filter holes 401 block the passage of particulate matter in the emissions, thereby achieving filtration.

By adopting the technical solution of this embodiment, the structure of the filter element 40 is simple, and the processing and manufacturing are simple.

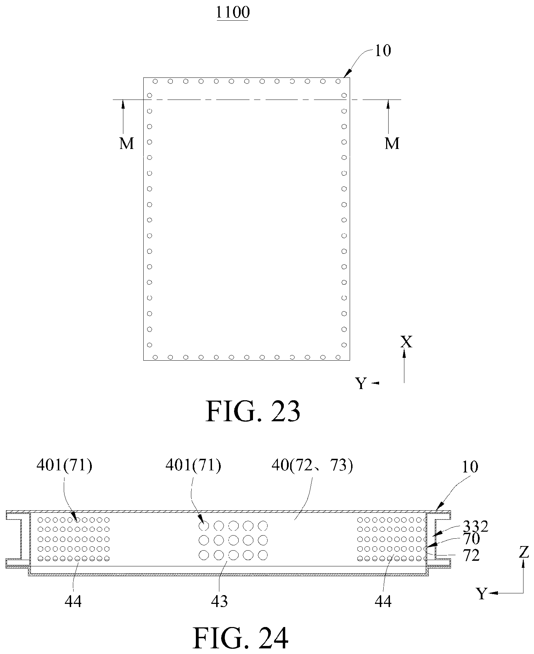

In another embodiment of the present application, as shown in FIGS. 23-25, the filter element 40 has a first filter portion 43 and a second filter portion 44. Both the first filter portion 43 and the second filter portion 44 are provided with a plurality of filter holes 401. A first discharge path N' and a second discharge path N are formed between the first pressure relief mechanism 215 of at least one battery cell 21 and the second pressure relief mechanism 16. The first discharge path N' passes through the filter holes 401 of the first filter portion 43, and the second discharge path N passes through the filter holes 401 of the second filter portion 44. When the length of the first discharge path N' is greater than the length of the second discharge path N, the hole diameter of the filter holes 401 of the first filter portion 43 is larger than the hole diameter of the filter holes 401 of the second filter portion 44.

The filter element 40 is provided with a plurality of filter holes 401, and the hole diameters of the plurality of filter holes 401 are different. The area where the filter holes 401 with larger hole diameters are located can be the first filter portion 43, and the area where the filter holes 401 with smaller hole diameters are located can be the second filter portion 44. After the battery cell 21 undergoes thermal runaway, the emissions released by the battery cell 21 flow into the pressure relief channel 30 and move along the pressure relief channel 30 to the exterior of the battery 1100. During this process, there are a plurality of discharge paths for the emissions to flow to the second pressure relief mechanism 16. The discharge path that passes through the filter holes 401 of the first filter portion 43 is the first discharge path N', and the discharge path that passes the second filter portion 44 is the second discharge path N. Moreover, the length of the first discharge path N' is greater than the length of the second discharge path N. In this way, the emissions flowing through the first discharge path N' have a longer flow time, the small particles in the emissions have a longer cooling time, the cooling effect is good, the temperature of the particulate matter when it exits the box is low, and it is not easy to deteriorate the environment when it is discharged out of the battery 1100. Similarly, the emissions flowing through the second discharge path N have a shorter flow time, the small particles in the emissions have a shorter cooling time, the temperature of the particulate matter when it exits the box is high, and it is easy to cause environmental deterioration when it is discharged out of the battery 1100. In addition, for the large particles in the emissions, compared with the small particles, after cooling through a longer discharge path, their temperature may not decrease significantly. When the large particles are discharged to the exterior of the battery 1100, they may still cause the problem of excessively high exhaust temperature of the battery 1100.

By adopting the technical solution of this embodiment, the hole diameter of the filter holes 401 of the first filter portion 43 is larger than the hole diameter of the filter holes 401 of the second filter portion 44. In this way, the low-temperature small particulate matter in the emissions flowing along the long discharge path will directly pass through the filter holes 401 of the first filter portion 43 and be discharged out of the battery 1100. At the same time, the filter holes 401 of the first filter portion 43 will also block the large particles with higher temperature in the emissions. Moreover, the large and small particulate matter with high temperature in the emissions flowing along the short discharge path will be blocked by the filter holes 401 of the second filter portion 44 and will not be discharged out of the battery 1100. In this way, the risk of causing the excessively high exhaust temperature of the battery 1100 can be reduced, and the reliability of the battery 1100 in use can be improved. In addition, through the cooperative design of the filter holes 401 with different sizes, the emissions can be quickly discharged out of the battery 1100, reducing the risk of internal pressure buildup in the box body 10.

In another embodiment of the present application, as shown in FIG. 5 and FIG. 6, the number of the filter holes 401 is plural, and the hole diameters of any two filter holes 401 are the same.

The hole diameters of any two filter holes 401 are the same. It can be understood that the hole diameters of all the filter holes 401 are the same.

By adopting the technical solution of this embodiment, the hole diameters of all the filter holes 401 are the same, the structure of the filter element 40 is simple, and it is convenient for processing and manufacturing.

In another embodiment of the present application, as shown in FIG. 24, the number of the filter holes 401 is plural, and the hole diameters of at least two filter holes 401 are different.

The hole diameters of at least two filter holes 401 are different. It can be understood that the hole diameters of the filter holes 401 are different in size, and they are not all the same.

By adopting the technical solution of this embodiment, the size of the hole diameters of the filter holes 401 can be flexibly designed to meet the emission requirements of the emissions, making the reliability of the battery 1100 in use better.

In another embodiment of the present application, as shown in FIGS. 7-13, the pressure relief channel 30 further includes a first sub-pressure relief channel 31 for connecting with the second pressure relief mechanism 16. The battery 1100 further includes a partition 50, and the partition 50 is used to separate the battery module 20 from the first sub-pressure relief channel 31. The partition 50 is provided with a plurality of first ventilable structures 51, and each first ventilable structure 51 connects the first pressure relief mechanism 215 of at least one battery cell 21 and the first sub-pressure relief channel 31.

The first sub-pressure relief channel 31 can refer to a channel that can be connected to the second pressure relief mechanism 16. After the emissions released by the battery cell 21 enter the first sub-pressure relief channel 31, they can move along the first sub-pressure relief mechanism to the second pressure relief mechanism 16.

The partition 50 may refer to a component that can separate the battery module 20 from the first sub-pressure relief channel 31. In some embodiments, the partition 50 can be a spacer plate or other structures that can separate the battery module 20 from the first sub-pressure relief channel 31.

The first ventilable structure 51 can refer to a ventilable structure that can connect the first sub-pressure relief channel 31 and the first pressure relief mechanism 215, and the emissions released by the first pressure relief mechanism 215 can enter the first sub-pressure relief channel 31 through the first ventilable structure 51. The first ventilable structure 51 may be a through hole, a vent valve, or the like. Without being limited thereto, in some embodiments, the first ventilable structure 51 can be a weak area set on the partition 50. When the first pressure relief mechanism 215 is actuated, the weak area can be damaged, and then the first pressure relief mechanism 215 is in communication with the first sub-pressure relief channel 31.

Each first ventilable structure 51 connects the first pressure relief mechanism 215 of at least one battery cell 21 and the first sub-pressure relief channel 31. It can be understood that when the number of the battery cells 21 is one, the first ventilable structure 51 connects the first pressure relief mechanism 215 of this battery cell 21 and the first sub-pressure relief channel 31. When the number of the battery cells 21 is plural, the number of the battery cells 21 connected to the first ventilable structure 51 includes but is not limited to one, two, three or four.

By adopting the technical solution of this embodiment, after the battery cell 21 in the battery module 20 undergoes thermal runaway, the emissions released by the first pressure relief mechanism 215 of this battery cell 21 enter the first pressure relief channel 30 through the first ventilable structure 51, and the first pressure relief channel 30 is separated from the battery module 20 by the partition 50. In this way, the risk of contact between the emissions in the first pressure relief channel 30 and the other battery cells 21 in the battery module 20 can be reduced, the risk of thermal runaway spreading can be reduced, and the reliability of the battery 1100 in use can be improved.

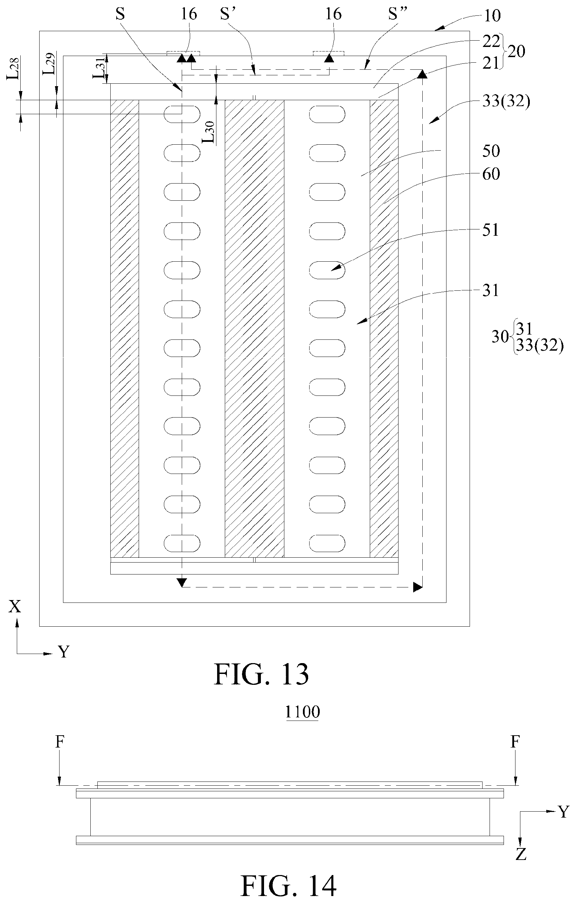

In another embodiment of the present application, as shown in FIG. 13, the pressure relief channel 30 includes at least two first sub-pressure relief channels 31, each first sub-pressure relief channel 31 is connected to the first ventilable structure 51 corresponding to a different battery cell 21, and the first sub-pressure relief channels 31 are separated by the spacer element 60.

The number of the first sub-pressure relief channels 31 includes but is not limited to two, three, four, or five. Each first sub-pressure relief channel 31 is connected to the first pressure relief mechanism 215 of a different battery cell 21, so that different battery cells 21 can be connected to the second pressure relief mechanism 16 through different first sub-pressure relief channels 31. The spacer element 60 can refer to a component located between two adjacent first sub-pressure relief channels 31 and separating the two adjacent first sub-pressure relief channels 31, so that the two adjacent first sub-pressure relief channels 31 are two independent channels.

By adopting the technical solution of this embodiment, when one of the battery cells 21 undergoes thermal runaway, the emissions released by this battery cell 21 enter the first sub-pressure relief channel 31 connected to this battery cell 21, and the first sub-pressure relief channels 31 are separated by the spacer element 60. In this way, the emissions will not directly enter other first sub-pressure relief channels 31, which is beneficial to reducing the risk of thermal runaway spreading.

In another embodiment of the present application, as shown in FIGS. 8-11, the pressure relief channel 30 further includes a communication channel 32. The wall face of the partition 50 and the inner wall face of the box body 10 enclose the communication channel 32, and each first sub-pressure relief channel 31 is connected to the second pressure relief mechanism 16 through the communication channel 32.

The communication channel 32 can refer to the clearance space between the wall face of the partition 50 and the inner wall face of the box body 10, and this clearance space can connect each first sub-pressure relief channel 31 and the second pressure relief mechanism 16. In this way, the emissions flowing out of each first sub-pressure relief channel 31 can move to the second pressure relief mechanism 16 through the communication channel 32, realizing the pressure relief and emission of the battery 1100.

By adopting the technical solution of this embodiment, the communication channel is formed by enclosing the wall face of the partition 50 and the inner wall face of the box body 10 to form the communication channel 32, and the structure is simple, which is convenient for processing and manufacturing.

In another embodiment of the present application, as shown in FIG. 4, FIG. 8 and FIG. 13, the battery module 20 includes at least one column of battery cells 21, each column of battery cells 21 includes at least one battery cell 21, at least one first sub-pressure relief channel 31 is correspondingly arranged for each column of battery cells 21, and each first sub-pressure relief channel 31 extends along the arrangement direction of the corresponding column of battery cells 21. Each first ventilable structure 51 corresponding to each column of battery cells 21 is connected to the corresponding first sub-pressure relief channel 31.

The battery cells 21 in the battery module 20 are arranged in a matrix. The battery module 20 includes at least one column of battery cells 21, that is, the number of columns of the battery cells 21 in the battery module 20 includes but is not limited to one, two, three, four, or five. The number of the first sub-pressure relief channels 31 correspondingly arranged for each column of battery cells 21 can be one, two, three, four, or five, and the first pressure relief mechanism 215 of each column of battery cells 21 can be communicated with the corresponding first sub-pressure relief channel 31. In this way, when the battery cell 21 undergoes thermal runaway and releases emissions, the emissions will enter the corresponding first sub-pressure relief channel 31 through the first ventilable structure 51, flow to the second pressure relief mechanism 16, and finally be discharged out of the box body 10 through the second pressure relief mechanism 16. Illustratively, the number of columns of the battery cells 21 is the same as the number of the first sub-pressure relief channels 31, and the first pressure relief mechanism 215 of each column corresponds to one first sub-pressure relief channel 31. This first sub-pressure relief channel 31 extends along the arrangement direction of the battery cells 21 in the corresponding column and is connected to the first pressure relief mechanism 215 of each battery cell 21 in the corresponding column. In this way, the emissions released by the battery cell 21 due to thermal runaway will enter the corresponding first sub-pressure relief channel 31 and be discharged.

By adopting the technical solution of this embodiment, when the battery cell 21 undergoes thermal runaway, the emissions released by this battery cell 21 will enter the corresponding first sub-pressure relief channel 31 and be discharged. The emissions will not enter other first sub-pressure relief channels 31 and come into contact with other battery cells 21, reducing the risk of thermal runaway spreading and improving the reliability of the battery cell 21.

In another embodiment of the present application, as shown in FIG. 8, the second pressure relief mechanism 16 is located on the side of the end of the battery module 20 along the extension direction (X direction) of the first sub-pressure relief channel 31.

The second pressure relief mechanism 16 is installed on the box body 10 and is located on the side of the end of the battery module 20 along the extension direction (X direction) of the first sub-pressure relief channel 31, that is, the second pressure relief mechanism 16 is located on the side of the end outlet of the first sub-pressure relief channel 31. In this way, after the emissions in the first sub-pressure relief channel 31 are discharged from the end opening of the first sub-pressure relief channel 31, they can be directly discharged out of the battery 1100 through the second pressure relief mechanism 16.

By adopting the technical solution of this embodiment, after the battery cell 21 undergoes thermal runaway, the emissions in the first sub-pressure relief channel 31 can be quickly discharged to the second pressure relief mechanism 16, and the battery 1100 has a good pressure relief and exhaust effect.

In another embodiment of the present application, as shown in FIG. 13, the communication channel 32 is an annular channel 33, and the annular channel 33 is annularly provided around the partition 50.

The communication channel 32 has a ring shape and is annularly provided around the partition 50.

By adopting the technical solution of this embodiment, the emissions discharged from the first sub-pressure relief channel 31 will enter the annular channel 33 and flow along the annular channel 33. In this way, the discharge path of the emissions can be extended, thereby prolonging the cooling time of the particulate matter in the emissions. The risk of the particulate matter being discharged out of the battery 1100 and causing the excessively high exhaust temperature of the battery 1100 is small.

In another embodiment of the present application, as shown in FIGS. 14-16, end plates 22 are provided at two ends of at least one column of battery cells 21. The end plates 22 are inserted into the annular channel 33 and connected to the inner wall face of the box body 10. The pressure relief channel 30 also includes a second sub-pressure relief channel 34. The second sub-pressure relief channel 34 intersects with the first sub-pressure relief channel 31, and the second sub-pressure relief channel 34 is used to communicate the corresponding first sub-pressure relief channel 31 with the annular channel 33.

The end plate 22 can refer to a component used to fix the corresponding column of battery cells 21 and located at the end of the corresponding column of battery cells 21. The end plate 22 and the battery cell 21 can be connected by means of screwing, clamping, bonding or the like.

The end plate 22 is inserted into the annular channel 33 and is hermetically connected to the inner wall face of the box body 10. It can be understood that a sealing structure can be formed between the end plate 22 and the inner wall face of the box body 10. The end plate 22 and the wall face of the box body 10 can form a sealing structure through sealing forms such as welding, sealant, and seal rings. This sealing structure separates the first sub-pressure relief channel 31 from the second pressure relief mechanism 16, so that the emissions in the first sub-pressure relief channel 31 cannot directly move to the second pressure relief mechanism 16. The pressure relief channel 30 also includes a second sub-pressure relief channel 34. The second sub-pressure relief channel 34 can refer to a channel intersecting with the first sub-pressure relief channel 31. In this way, the second sub-pressure relief channel 34 can extend to the side of the first sub-pressure relief channel 31, thereby communicating the first sub-pressure relief mechanism with the annular channel 33. In this way, the emissions in the first sub-pressure relief channel 31 will flow into the annular channel 33 through the second sub-pressure relief channel 34, finally flow to the second pressure relief mechanism 16, and then be discharged out of the box body 10.

By adopting the technical solution of this embodiment, the emissions released by the battery cell 21 need to pass through the first sub-pressure relief channel 31, the second sub-pressure relief channel 34, and the annular channel 33 before flowing to the second pressure relief mechanism 16 and finally being discharged out of the battery 1100. In this way, the discharge path of the emissions can be extended, the cooling time of the particulate matter in the emissions is long, and it is beneficial to reducing the risk of the excessively high exhaust temperature of the battery 1100.

In another embodiment of the present application, as shown in FIGS. 14-16, end plates 22 are provided at two ends of each column of battery cells 21, and each first sub-pressure relief channel 31 is in communication with the second sub-pressure relief channel 34.

The end plates 22 at two ends of each column of battery cells 21 are inserted into the annular channel 33 and are hermetically connected to the inner wall face of the box body 10. In this way, the end plates 22 are connected to the inner wall face of the box body 10 to form a sealing structure, and the emissions discharged from each first sub-pressure relief channel 31 can be discharged into the annular channel 33 through the second sub-pressure relief channel 34. In addition, in the battery module 20, at least some of the end plates 22 located at the same end can be connected into an integral structure by means of but not limited to bolt connection, bonding, clamping, riveting, welding, integral molding, or the like, so that the battery cells 21 in the battery module 20 are more closely connected. The integral molding refers to the molding made by integral processes such as extrusion, injection molding, and die casting.

By adopting the technical solution of this embodiment, when any one of the battery cells 21 in the battery cell 21 undergoes thermal runaway, the emissions released by it will flow into the annular channel 33 through the corresponding first sub-pressure relief channel 31 and the second sub-pressure relief channel 34, then flow to the second pressure relief mechanism 16 through the annular channel 33, and then be released to the exterior of the battery 1100 through the second pressure relief mechanism 16, which is beneficial to improving the reliability of the battery 1100 in use.

In another embodiment of the present application, as shown in FIGS. 14-16, the pressure relief channel 30 includes a plurality of second sub-pressure relief channels 34, and the second sub-pressure relief channels 34 are separated by the spacer elements 60.

The presence of the plurality of second sub-pressure relief channels 34 means that the number of the second sub-pressure relief channels 34 includes but is not limited to two, three or four. The adjacent second sub-pressure relief mechanisms are separated by the spacer elements 60. It can be understood that the adjacent second sub-pressure relief channels 34 are not directly connected. In addition, the spacer elements 60 separate the adjacent first sub-pressure relief channels 31 and the adjacent second sub-pressure relief channels 34 at the same time, resulting in a good structural compactness of the entire battery 1100.

By adopting the technical solution of this embodiment, the design of the plurality of second sub-pressure relief channels 34 enables the emissions in the first sub-pressure relief mechanism to be discharged through the plurality of second sub-pressure relief channels 34, which is beneficial for the rapid discharge of emissions, reduces the risks such as internal pressure buildup and excessive temperature in the box body 10, and improves the reliability of the battery 1100 in use.

In another embodiment of the present application, as shown in FIGS. 14-16, the plurality of second sub-pressure relief channels 34 are disposed at intervals along the extension direction (X direction) of the first sub-pressure relief channel 31.

The extension direction of the first sub-pressure relief channel 31 can be understood as the arrangement direction (X direction) of the battery cells 21 in a column of battery cells 21.

By adopting the technical solution of this embodiment, the battery cells 21 arranged along the extension direction (X direction) of the first sub-pressure relief channel 31 can quickly discharge the emissions released by the battery cells 21 into the annular channel 33 through the corresponding second sub-pressure relief channel 34, and finally release them to the exterior of the box body 10 through the second pressure relief mechanism 16. This reduces the risks such as internal pressure buildup and excessive temperature in the box body 10, and is beneficial for improving the reliability of the battery 1100 in use.

In another embodiment of the present application, as shown in FIGS. 14-16, the first sub-pressure relief channel 31 is perpendicular to the second sub-pressure relief channel 34.

The first sub-pressure relief channel 31 is perpendicular to the second sub-pressure relief channel 34. It can be understood that the first sub-pressure relief channel 31 and the second sub-pressure relief channel 34 are arranged vertically and horizontally. Illustratively, the spacer elements 60 are arranged in a matrix. The first sub-pressure relief channel 31 is formed between two adjacent columns of spacer elements 60, and the second sub-pressure relief channel 34 is formed between two adjacent rows of spacer elements 60.

By adopting the technical solution of this embodiment, the first sub-pressure relief channel 31 and the second sub-pressure relief channel 34 are regularly distributed, which is convenient for processing and manufacturing.

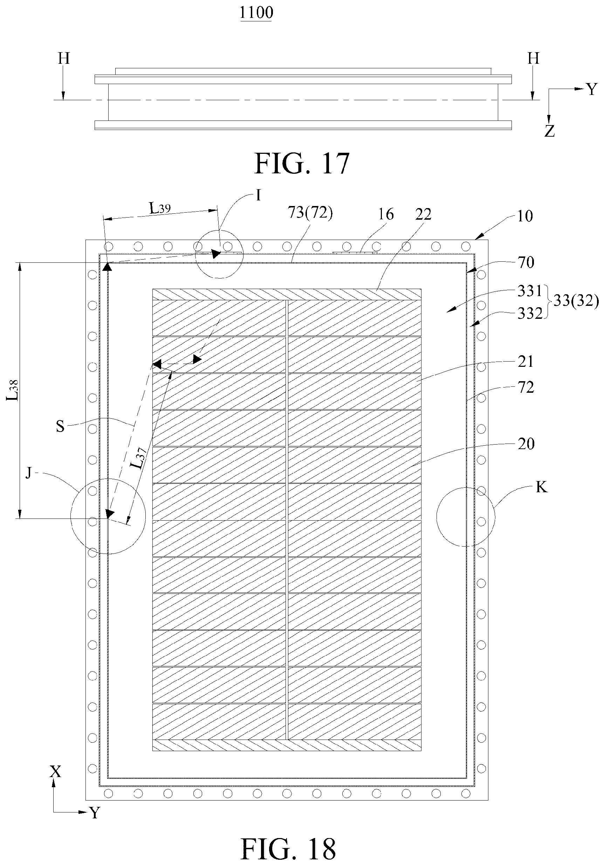

In another embodiment of the present application, as shown in FIGS. 17-21, the annular channel 33 is provided with an annular element 70 connected to the box body 10. The annular element 70 is used to divide the annular channel 33 into a first sub-annular channel 331 and a second sub-annular channel 332, and the second sub-annular channel 332 is annularly provided around the first sub-annular channel 331. The annular element 70 is provided with a second ventilable structure 71 for communicating the first sub-annular channel 331 with the second sub-annular channel 332. The second sub-annular channel 332 is connected to the second pressure relief mechanism 16, and the first sub-annular channel 331 is in communication with the first sub-pressure relief channel 31.

The annular element 70 can refer to an annular component located in the annular channel 33 and extending along the circumferential direction of the annular channel 33, and the annular element 70 is connected to the box body 10, with the box body 10 serving as the mounting base of the annular element 70. At the same time, the annular element 70 can divide the annular channel 33 into a first sub-annular channel 331 and a second sub-annular channel 332. The first sub-annular channel 331 is located inside the second sub-annular channel 332, that is, the second sub-annular channel 332 is annularly provided around the first sub-annular channel 331. The shape of the annular element 70 is adapted to the shape of the annular channel 33. The shape of the annular element 70 can be various, such as circular, triangular, elliptical, quadrilateral, etc.

The second ventilable structure 71 can refer to a structure that can communicate the first sub-annular channel 331 with the second sub-annular channel. The second ventilable structure 71 can be a through hole, a vent valve, a pressure relief valve, and other structures.

The second sub-annular channel 332 is connected to the second pressure relief mechanism 16, and the first sub-annular channel 331 is in communication with the first sub-pressure relief channel 31. It can be understood that when the second pressure relief mechanism 16 is actuated, the emissions released by the battery cell 21 first enter the first sub-annular channel 331, then enter the second sub-annular channel 332 through the second ventilable structure 71, and finally are released to the exterior of the box body 10 through the second pressure relief mechanism 16.

By adopting the technical solution of this embodiment, the emissions released by the battery cell 21 need to pass through the first sub-annular channel 331 and the second sub-annular channel 332. In this way, the discharge path of the emissions can be extended, and the cooling time of the particulate matter in the emissions is long, which is beneficial for reducing the risk of the excessively high exhaust temperature of the battery 1100 and improving the reliability of the battery 1100 in use.

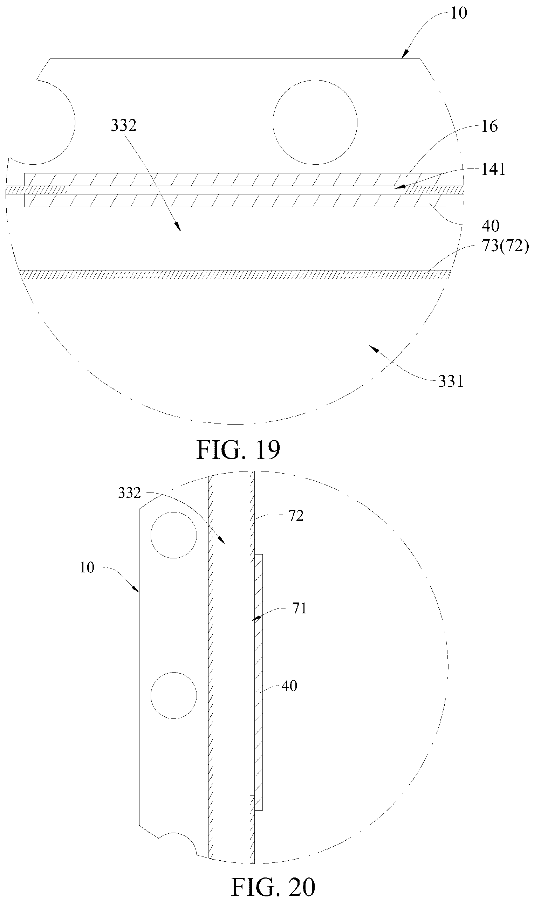

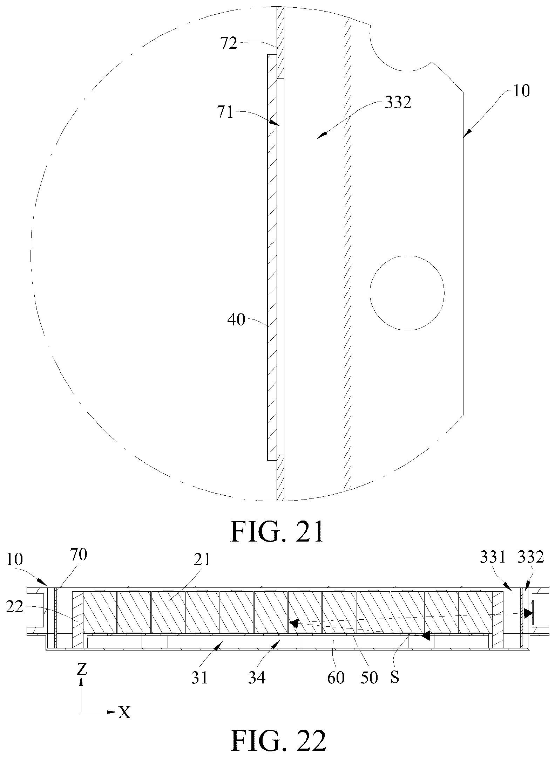

In another embodiment of the present application, as shown in FIG. 20 and FIG. 21, the second ventilable structure 71 is a through hole.

The through hole can refer to a hole structure that penetrates the annular element 70.

Through the technical solution of this embodiment, the second ventilable structure 71 is a through hole, and the structure is simple, which is convenient for processing and manufacturing.

In another embodiment of the present application, as shown in FIG. 23 and FIG. 24, the annular element 70 includes at least three side wall portions 72 connected end to end in sequence, and a side wall portion 72 close to the second pressure relief mechanism 16 is provided with the second ventilable structure 71.

The annular element 70 can be divided into a plurality of segments along its circumferential direction. The side wall portion 72 can refer to one segment of the annular element 70. For example, as shown in FIG. 18, the annular element 70 is rectangular, and the side wall portion 72 refers to one side of the annular element 70.

The side wall portion 72 close to the second pressure relief mechanism 16 can refer to the side wall portion 72 closest to the second pressure relief mechanism 16.

By adopting the technical solution of this embodiment, the second ventilable structure 71 is close to the second pressure relief mechanism 16. The emissions passing through the second ventilable structure 71 can quickly move to the second pressure relief mechanism 16 and then be discharged through the second pressure relief mechanism 16, which is beneficial for reducing the risks such as internal pressure buildup in the box body 10 and improving the reliability of the battery 1100 in use.

In another embodiment of the present application, as shown in FIG. 23 and FIG. 24, when the filter element 40 is provided in the box body 10, the side wall portion 72 close to the second pressure relief mechanism 16 is the filter element 40, and the filter hole 401 is the second ventilable structure 71.

By adopting the technical solution of this embodiment, by directly forming the filter hole 401 on the side wall portion 72 close to the second pressure relief mechanism 16, not only can the filtration of the emissions be achieved, but also the communication between the first sub-annular channel 331 and the second sub-annular channel 332 can be realized. The integration of the annular element 70 and the filter element 40 has a simple structure and is convenient for processing and manufacturing.

In another embodiment of the present application, as shown in FIGS. 18-21, the annular element 70 includes at least three side wall portions 72 connected end to end in sequence, and a side wall portion 72 far away from the second pressure relief mechanism 16 is provided with the second ventilable structure 71.

The side wall portion 72 far away from the second pressure relief mechanism 16 can refer to the side wall portion 72 other than the side wall portion 72 closest to the second pressure relief mechanism 16.

By adopting the technical solution of this embodiment, since the distance between the second ventilable structure 71 and the second pressure relief mechanism 16 is relatively long, the emissions passing through the second ventilable structure 71 need to travel a certain distance to reach the second pressure relief mechanism 16 and then be discharged out of the box body 10. In this way, the discharge path of the emissions can be extended, and the cooling time of the particulate matter in the emissions is long, which is beneficial for reducing the risk of the excessively high exhaust temperature of the battery 1100 and improving the reliability of the battery 1100 in use.

In another embodiment of the present application, as shown in FIGS. 18-21, the side wall portion 72 close to the second pressure relief mechanism 16 is the first side wall portion 73, and at least one of the side wall portion 72 adjacent to the first side wall portion 73 and the side wall portion 72 opposite to the first side wall portion 73 is provided with the second ventilable structure 71.

The first side wall portion 73 can refer to the side wall portion 72 closest to the second pressure relief mechanism 16.

The side wall portion 72 adjacent to or opposite to the first side wall portion 73 can be referred to as the side wall portion 72 far away from the second pressure relief mechanism 16.

At least one of the side wall portion 72 adjacent to the first side wall portion 73 and the side wall portion 72 opposite to the first side wall portion 73 is provided with the second ventilable structure 71. It can be understood that the side wall portion 72 adjacent to the first side wall portion 73 is provided with the second ventilable structure 71, or the side wall portion 72 opposite to the first side wall portion 73 is provided with the second ventilable structure 71, or both the side wall portion 72 adjacent to the first side wall portion 73 and the side wall portion 72 opposite to the first side wall portion 73 are provided with the second ventilable structure 71.

By adopting the technical solution of this embodiment, the second ventilable structure 71 is designed to be far away from the second pressure relief mechanism 16. In this way, the discharge path of the emissions can be extended, and the cooling time of the particulate matter in the emissions is long, which is beneficial for reducing the risk of the excessively high exhaust temperature of the battery 1100.

In another embodiment of the present application, as shown in FIGS. 18-21, the second ventilable structure 71 is located in the middle of the corresponding side wall portion 72.

The second ventilable structure 71 is located in the middle of the corresponding side wall portion 72. It can be understood that the second ventilable structure 71 is located at the middle position of the corresponding side wall portion 72.

By adopting the technical solution of this embodiment, the second ventilable structure 71 is located in the middle of the side wall portion 72. In this way, the distance from the battery cells 21 at two ends to the second ventilable structure 71 is not too far, and the emissions released by the battery cells 21 at the ends can also be quickly discharged, which is beneficial for improving the reliability of the battery 1100 in use.

In another embodiment of the present application, when the filter element 40 is provided in the box body 10, the side wall portion 72 far away from the second pressure relief mechanism 16 is the filter element 40, and the filter hole 401 is the second ventilable structure 71.

By adopting the technical solution of this embodiment, by directly forming the filter hole 401 on the side wall portion 72 far away from the second pressure relief mechanism 16, not only can the filtration of the emissions be achieved, but also the communication between the first sub-annular channel 331 and the second sub-annular channel 332 can be realized. The integration of the annular element 70 and the filter element 40 has a simple structure and is convenient for processing and manufacturing.

In another embodiment of the present application, as shown in FIGS. 18-21, when the filter element 40 is provided in the box body 10, the filter element 40 covers the second ventilable structure 71.

The filter element 40 covers the second ventilable structure 71. It can be understood that the filter element 40 can cover the second ventilable structure 71. If the filter element 40 is located on the side of the second ventilable structure 71 facing the first sub-annular channel 331, the emissions in the first sub-annular channel 331 will first pass through the filter element 40 for filtration and then enter the second sub-annular channel 332 through the second ventilable structure 71.

Alternatively, if the filter element 40 is located on the side of the second ventilable structure 71 opposite to the first sub-annular channel 331, the emissions in the first sub-annular channel 331 will first pass through the second ventilable structure 71 and then be filtered by the filter element 40 before entering the second sub-annular channel 332. Alternatively, filter elements 40 are provided on both the side of the second ventilable structure 71 facing the first sub-annular channel 331 and the side opposite to the first sub-annular channel 331, so that double filtration can be realized, the filtering effect is better, and the reliability of the battery 1100 in use is better.

By adopting the technical solution of this embodiment, the filter element 40 covers the second ventilable structure 71, which has a simple structure and is convenient for processing and manufacturing.

In another embodiment of the present application, as shown in FIGS. 23-25, the filter element 40 is located between the battery module 20 and the second pressure relief mechanism 16. The filter element 40 has a first filter portion 43 and a second filter portion 44. Both the first filter portion 43 and the second filter portion 44 are provided with a plurality of filter holes 401. A first discharge path N' and a second discharge path N are formed between the first pressure relief mechanism 215 of the battery cell 21 closest to the second pressure relief mechanism 16 and the second pressure relief mechanism 16. The first discharge path N' passes through the filter holes 401 of the first filter portion 43, and the second discharge path N passes through the filter holes 401 of the second filter portion 44. When the length of the first discharge path N' is greater than the length of the second discharge path N, the hole diameter of the filter holes 401 of the first filter portion 43 is larger than the hole diameter of the filter holes 401 of the second filter portion 44.

The battery cell 21 closest to the second pressure relief mechanism 16 can refer to the battery cell 21 located at the end of the battery module 20 and close to the second pressure relief mechanism 16.

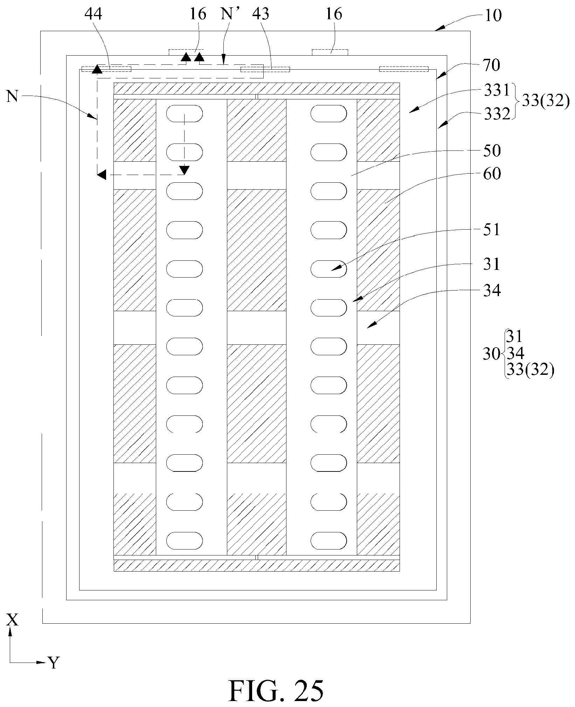

As shown in FIG. 25, the filter element 40 is located between the battery module 20 and the second pressure relief mechanism 16. It can be understood that since the battery module 20 is arranged in an array, the filter element 40 and the second pressure relief mechanism 16 are located on the side of the end of the battery module 20 along the column direction (X direction) of the battery cells 21, and the filter element 40 is located between the second pressure relief mechanism 16 and the battery module 20. In this way, for any battery cell 21 in the battery module 20, the length of the first discharge path N' of the emissions released by it passing through the filter holes 401 of the first filter portion 43 will be greater than the length of the second discharge path N of the emissions released by this battery cell 21 passing through the filter holes 401 of the second filter portion 44. Then, during the design, the positions of the first filter portion 43 and the second filter portion 44 can be determined according to the battery cell 21 closest to the second pressure relief mechanism 16, so as to ensure that for all the battery cells 21, the length of the first discharge path N' of the emissions released by them passing through the filter holes 401 of the first filter portion 43 will be greater than the length of the second discharge path N of the emissions passing through the filter holes 401 of the second filter portion 44.

By adopting the technical solution of this embodiment, the hole diameter of the filter holes 401 of the first filter portion 43 is larger than the hole diameter of the filter holes 401 of the second filter portion 44. In this way, the low-temperature small particulate matter in the emissions flowing along the long discharge path will directly pass through the filter holes 401 of the first filter portion 43 and be discharged out of the battery 1100. At the same time, the filter holes 401 of the first filter portion 43 will also block the large particles with higher temperature in the emissions. Moreover, the large and small particulate matter with high temperature in the emissions flowing along the short discharge path will be blocked by the filter holes 401 of the second filter portion 44 and will not be discharged out of the battery 1100. In this way, the risk of causing the excessively high exhaust temperature of the battery 1100 can be reduced, and the reliability of the battery 1100 in use can be improved. In addition, through the cooperative design of the filter holes 401 with different sizes, the emissions can be quickly discharged out of the battery 1100, reducing the risk of internal pressure buildup in the box body 10.

In another embodiment of the present application, as shown in FIG. 9, the box body 10 further includes a bottom plate 15. The partition 50 is supported on the bottom plate 15 by the spacer element 60. The battery module 20 is located above the partition 50, and the first pressure relief mechanism 215 is located at the bottom of the battery cell 21.

In the use state of the battery 1100, the bottom plate 15 can refer to the plate element at the bottom of the box body 10. The partition 50 is supported on the bottom plate 15 by the spacer element 60. The partition 50 is lifted by the spacer element 60, so that there is a gap between the partition 50 and the bottom plate 15, which is convenient for constructing the first sub-pressure relief channel 31 between the partition 50 and the bottom plate 15.

By adopting the technical solution of this embodiment, the first pressure relief mechanism 215 is located at the bottom of the battery cell 21. At the same time, the battery module 20 and the first sub-pressure relief mechanism are separated by the partition 50. In this way, the emissions released by the first pressure relief mechanism 215 are unlikely to come into contact with the electrical components at the top of the battery cell 21, reducing the risk of damage to the battery cell 21 and being beneficial for improving the reliability of the battery 1100 in use.

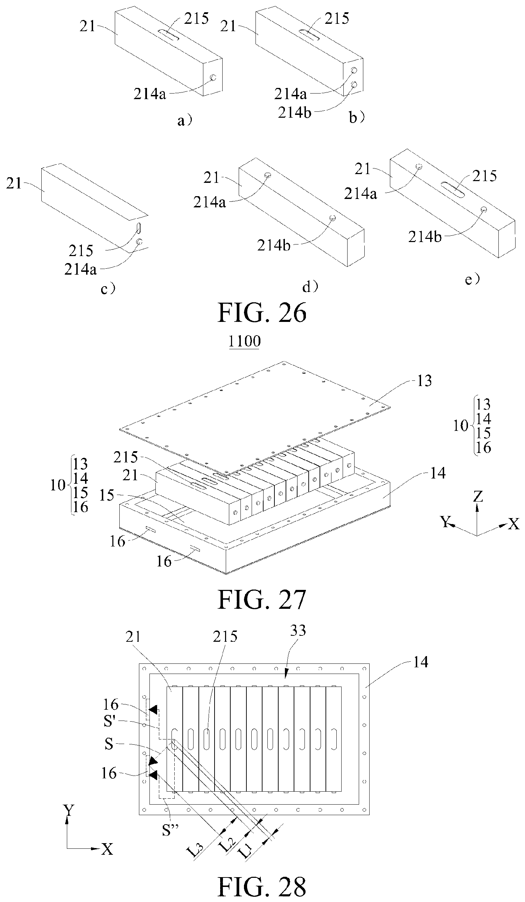

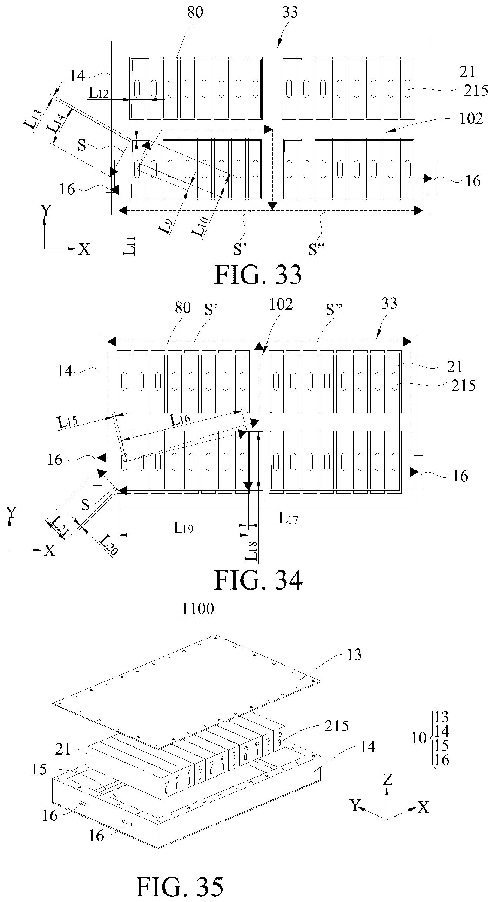

In another embodiment, as shown in FIG. 28 and FIG. 35, the first pressure relief mechanism 215 can also be located on the side of the battery cell 21, or the first pressure relief mechanism 215 is located at the top of the battery cell 21. Then, the partition 50, the spacer element 60, the first sub-pressure relief channel 31 and the second sub-pressure relief channel 34 can be designed correspondingly according to the position of the first pressure relief mechanism 215, and the specific design can be performed according to the actual needs.

In another embodiment of the present application, the partition 50 is a thermal management component, and the thermal management component is used for heat exchange with the battery module 20.

The thermal management component can refer to a component for heat exchange with the battery cell 21, such as a liquid cooling plate and other components.

Through the technical solution of this embodiment, the partition 50 is directly a thermal management component, so there is no need to add additional components, which is beneficial for reducing the number of components of the battery 1100 and is convenient for processing and manufacturing.

In another embodiment of the present application, as shown in FIG. 13, the cross-sectional area of the filter hole 401 with the largest hole diameter is S, the shortest discharge path between the first pressure relief mechanism 215 of at least one battery cell 21 and the second pressure relief mechanism 16 is L, and then

$$0.002\,\mathrm{m}/\mathrm{mm}^2 < \frac{L}{S} < 55\,\mathrm{m}/\mathrm{mm}^2$$ , where the unit of L is m and the unit of S is mm².

The cross-sectional area of the filter hole 401 with the largest hole diameter can be understood as the cross-sectional area of the filter hole 401 with the largest hole diameter among the filter holes 401.

The shortest discharge path between the first pressure relief mechanism 215 of at least one battery cell 21 and the second pressure relief mechanism 16 is L. It can be understood that among the plurality of discharge paths of the emissions released by the first pressure relief mechanism 215 of the battery cell 21 flowing to the second pressure relief mechanism 16, the length of the shortest discharge path is L.

Generally, when the battery cell 21 undergoes thermal runaway, the longer the length L of the shortest discharge path of the battery cell 21 is, the longer the cooling time the particulate matter in the emissions can obtain, the lower the temperature of the particulate matter when it exits the box is, the lower the requirement for the filtering function of the filter element 40 is, and the larger the cross-sectional area of the filter hole 401 with the largest hole diameter of the filter element 40 can be designed.

By adopting the technical solution of this embodiment, through the setting of

$$0.002\,\mathrm{m}/\mathrm{mm}^2 < \frac{L}{S} < 55\,\mathrm{m}/\mathrm{mm}^2$$ , the cross-sectional area of the filter hole 401 with the largest hole diameter of the filter element 40 and the shortest discharge path of the battery cell 21 are rationally designed, reducing the risk of the excessively high exhaust temperature of the battery 1100 and contributing to improving the reliability of the battery 1100 in use. Under the condition of meeting the setting of $$\frac{L}{S} < 55\,\mathrm{m}/\mathrm{mm}^2$$ , when the length of the shortest discharge path of the battery cell 21 is fixed, the cross-sectional area of the filter hole 401 with the largest hole diameter will not be designed too small, so that the filter hole 401 can allow the particulate matter to pass through smoothly and quickly, thereby reducing the risk of serious damage to the box body 10 caused by blockage of the filter element 40, untimely pressure relief, etc.

Under the condition of meeting the setting of $$\frac{L}{S} > 0.002\,\mathrm{m}/\mathrm{mm}^2$$ , when the shortest discharge path of the battery cell 21 is fixed, the cross-sectional area of the filter hole 401 with the largest hole diameter will not be designed too large, so that the filter hole 401 can block the particulate matter with higher temperature, thereby reducing the risk of the external environment of the battery deteriorating caused by a large number of sparks igniting the external flue gas.

As shown in FIG. 26, in the use state of the battery 1100, generally, the first pressure relief mechanism 215 of the battery cell 21 can be located at the top, side or bottom of the battery cell 21. Illustratively, as shown in FIG. 26a), FIG. 26b), and FIG. 26e), when the first pressure relief mechanism 215 is located at the top of the battery cell 21, the positive electrode terminal 214a and the negative electrode terminal 214b of the battery cell 21 can be located at the top of the battery cell 21, or on the same side of the battery cell 21, or respectively on the opposite sides of the battery cell 21. As shown in FIG. 26c), when the first pressure relief mechanism 215 is located on the side of the battery cell 21, one of the positive electrode terminal 214a and the negative electrode terminal 214b of the battery cell 21 is located on the same side of the battery cell 21 as the first pressure relief mechanism 215, and the other is located on the opposite side of the battery cell 21 from the first pressure relief mechanism 215. As shown in FIG. 26d), when the first pressure relief mechanism 215 is located at the bottom of the battery cell 21, the positive electrode terminal 214a and the negative electrode terminal 214b of the battery cell 21 can be located at the top of the battery cell 21.

When different types of battery cells 21 are installed in the box body 10, the shortest discharge path of the battery cells 21 is different. The following describes the shortest path between the first pressure relief mechanism 215 and the second pressure relief mechanism 16 of the battery cells 21 in combination with some specific embodiments.

In a specific embodiment, as shown in FIGS. 27-29, the box body 10 includes a top cap 13, a frame 14 and a bottom plate 15. The top cap 13 and the bottom plate 15 respectively cover the upper and lower sides of the frame 14 to enclose an accommodation space for accommodating the battery cells 21. The frame 14 is a rectangular frame. The battery module 20 includes a column of battery cells 21, and this column of battery cells 21 is arranged along the length direction (X direction) of the box body 10. Two second pressure relief mechanisms 16 are provided front and rear on the left wall of the frame 14 of the box body 10. The top of each battery cell 21 is provided with a first pressure relief mechanism 215. A first exhaust channel 101 is formed between the top surface of the battery cell 21 and the top cap 13, and an annular channel 33 is enclosed by the peripheral wall of the battery module 20 and the inner peripheral wall of the frame 14. The emissions released by the first pressure relief mechanism 215 flow into the annular channel 33 through the first exhaust channel 101, and then move to the second pressure relief mechanism 16 through the annular channel 33.

For the convenience of explanation, the discharge path of the leftmost battery cell 21 is selected as an example. After the emissions of this battery cell 21 are released, there are a plurality of discharge paths. The dotted arrows in FIG. 28 illustrate schematic diagrams of the three discharge paths of the emissions of this battery cell 21 discharged from the first pressure relief mechanism 215 to the second pressure relief mechanism 16. After the first pressure relief mechanism 215 of this battery cell 21 discharges the emissions, the discharge path in which the emissions move obliquely to the left to the second pressure relief mechanism 16 on the front side is the third discharge path S. The discharge path in which the emissions move to the left to the second pressure relief mechanism 16 on the rear side is the fourth discharge path S'. The discharge path in which the emissions move forward to the second pressure relief mechanism 16 on the front side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the top surface of the battery cell 21 is the first projection point, and the projection point of the center of the second pressure relief mechanism 16 on the top surface of the battery cell 21 is the second projection point. The connection line between the first projection point and the second projection point is the first connection line. The projection line of the periphery of the first pressure relief mechanism 215 on the top surface of the battery cell 21 is the first projection line. The intersection point of the first connection line and the first projection line is the first intersection point. The intersection point of the first connection line and the left side surface of this battery cell 21 is the second intersection point. The distance between the first intersection point and the center of the first pressure relief mechanism 215 is $L_1$. The distance between the first intersection point and the second intersection point is $L_2$. The distance between the second intersection point and the center of the second pressure relief mechanism 16 is $L_3$, where $L=L_1+L_2+L_3$.

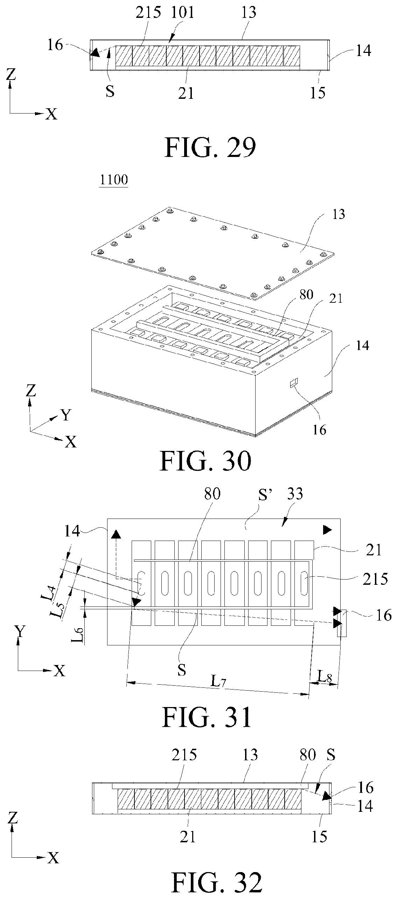

In a specific embodiment, as shown in FIGS. 30-32, the difference between this embodiment and the previous one is that: the number of the second pressure relief mechanisms 16 is one, and the second pressure relief mechanism 16 is located on the right wall of the frame 14. An enclosure element 80 is provided between the top of the battery cell 21 and the top cap 13. The enclosure element 80 surrounds the exterior of the first pressure relief mechanism 215 of a column of battery cells 21. The enclosure element 80 is U-shaped, and the opening of the enclosure element 80 faces to the right. The emissions released by the first pressure relief mechanism 215 flow into the annular channel 33 along the channel enclosed by the enclosure element 80 and through the opening of the enclosure element 80, and then flow to the second pressure relief mechanism 16 through the annular channel 33.

For the convenience of explanation, the discharge path of the leftmost battery cell 21 is selected as an example. After the emissions of this battery cell 21 are released, there are a plurality of discharge paths. The dotted arrows in FIG. 31 illustrate schematic diagrams of the two discharge paths of the emissions of this battery cell 21 discharged from the first pressure relief mechanism 215 to the second pressure relief mechanism 16. After the emissions released by the first pressure relief mechanism 215 of this battery cell 21 are discharged from the opening of the enclosure element 80, the discharge path of discharging forward is the third discharge path S; the discharge path of discharging backward after being discharged from the opening is the fourth discharge path S'. The length of the third discharge path S is less than the length of the fourth discharge path S', and the third discharge path S can be the shortest discharge path.

The length L of the third discharge path S can be measured by the following method: the projection point of the center of the first pressure relief mechanism 215 on the top surface of the battery cell 21 is the first projection point, and the projection point of the center of the second pressure relief mechanism 16 on the top surface of the battery cell 21 is the second projection point. The projection line of the periphery of the first pressure relief mechanism 215 on the top surface of the battery cell 21 is the first projection line. The intersection line between the left wall face of the front frame bar of the enclosure element 80 and the top surface of the battery cell 21 is the first intersection line. The connection line between the rear end point of the first intersection line and the first projection point is the second connection line. The intersection point of the first projection line and the second connection line is the third intersection point. The connection line between the front end point of the first intersection line and the second projection point is the third connection line. The intersection point of the third connection line and the right side surface of the rightmost battery cell 21 is the fourth intersection point. The distance between the center of the first pressure relief mechanism 215 and the third intersection point is $L_4$. The distance between the third intersection point and the rear end point of the first intersection line is $L_5$. The length of the first intersection line is $L_6$. The distance between the fourth intersection point and the front end point of the first intersection line is $L_7$. The distance between the center of the second pressure relief mechanism 16 and the fourth intersection point is $L_8$,

where $L=L_4+L_5+L_6+L_7+L_8$.

In a specific embodiment, as shown in FIG. 33, the difference between this embodiment and the previous one is that: the battery module 20 includes two columns of battery cells 21 distributed front and rear. Each column of battery cells 21 is arranged along the length direction (X direction) of the box body 10, and the two columns of battery cells 21 are arranged along the width direction (Y direction) of the box body 10. The two columns of battery cells 21 are divided into four areas: front, rear, left and right. Each area is correspondingly provided with an enclosure element 80. The second pressure relief mechanisms 16 are provided on both the left and right sides of the frame 14. Each enclosure element 80 has an opening on its rear wall. A second exhaust channel 102 is formed between two adjacent enclosure elements 80 at intervals. The emissions released due to the thermal runaway of the battery cells 21 flow into the second exhaust channel 102 through the opening of the corresponding enclosure element 80, then flow into the annular channel 33 through the second exhaust channel 102, and finally flow to the second pressure relief mechanism 16.

For the convenience of explanation, the discharge path of the leftmost and frontmost battery cell 21 is selected as an example. After the emissions of this battery cell 21 are released, there are a plurality of discharge paths. The dotted arrows in FIG. 33 illustrate three schematic diagrams of the discharge paths of the emissions of this battery cell 21 discharged from the first pressure relief mechanism 215 to the second pressure relief mechanism 16. After the emissions are discharged from the opening of the left-front enclosure element 80, the discharge path of discharging to the left to the second pressure relief mechanism 16 on the left side is the third discharge path S. After the emissions are discharged from the opening of the left-front enclosure element 80, the discharge path of discharging to the right to the second pressure relief mechanism 16 on the left side is the fourth discharge path S'. After the emissions are discharged from the opening of the left-front enclosure element 80, the discharge path of discharging to the right to the second pressure relief mechanism 16 on the right side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the top surface of the battery cell 21 is the first projection point, and the projection point of the center of the second pressure relief mechanism 16 on the top surface of the battery cell 21 is the second projection point. The projection line of the periphery of the first pressure relief mechanism 215 on the top surface of the battery cell 21 is the first projection line. The intersection line between the right wall face of the left-rear frame bar of the enclosure element 80 and the top surface of the battery cell 21 is the second intersection line. The intersection line between the rear wall face of the left-rear frame bar of the enclosure element 80 and the top surface of the battery cell 21 is the third intersection line. The connection line between the first projection point and the front end point of the second intersection line is the fourth connection line. The intersection point of the fourth connection line and the first projection line is the fifth intersection point. The connection line between the second projection point and the left end point of the third intersection line is the fifth connection line. The intersection point of the fifth connection line and the left side surface of the leftmost battery cell 21 is the sixth intersection point. The distance between the center of the first pressure relief mechanism 215 and the fifth intersection point is $L_9$. The distance between the fifth intersection point and the front end point of the second intersection line is $L_{10}$. The length of the second intersection line is $L_{11}$. The length of the third intersection line is $L_{12}$. The distance between the sixth intersection point and the left end point of the third intersection line is $L_{13}$. The distance between the sixth intersection point and the center of the second pressure relief mechanism 16 is $L_{14}$, where $L=L_9+b_{10}+L_{11}+L_{12}+L_{13}+L_{14}$.

In a specific embodiment, as shown in FIG. 34, the difference between this embodiment and the previous one is that: the battery module 20 includes two columns of battery cells 21 distributed front and rear. The two columns of battery cells 21 are divided into two areas: left and right. Each area is correspondingly provided with an enclosure element 80. The openings of the two enclosure elements 80 are oppositely arranged. The second pressure relief mechanisms 16 are provided on both the left and right sides of the frame 14. A second exhaust channel 102 is formed between two adjacent enclosure elements 80. The emissions released due to the thermal runaway of the battery cells 21 flow into the second exhaust channel 102 through the opening of the corresponding enclosure element 80, then flow into the annular channel 33 through the second exhaust channel 102, and finally flow to the second pressure relief mechanism 16.

For the convenience of explanation, the discharge path of the leftmost and frontmost battery cell 21 is selected as an example. After the emissions of this battery cell 21 are released, there are a plurality of discharge paths. The dotted arrows in FIG. 34 illustrate three schematic diagrams of the discharge paths of the emissions of this battery cell 21 discharged from the first pressure relief mechanism 215 to the second pressure relief mechanism 16. After the emissions are discharged from the opening of the left enclosure element 80, the discharge path of discharging forward to the second pressure relief mechanism 16 on the left side is the third discharge path S. After the emissions are discharged from the opening of the left enclosure element 80, the discharge path of discharging backward to the second pressure relief mechanism 16 on the left side is the fourth discharge path S'. After the emissions are discharged from the opening of the left enclosure element 80, the discharge path of discharging backward to the second pressure relief mechanism 16 on the right side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the top surface of the battery cell 21 is the first projection point, and the projection point of the center of the second pressure relief mechanism 16 on the top surface of the battery cell 21 is the second projection point. The projection line of the periphery of the first pressure relief mechanism 215 on the top surface of the battery cell 21 is the first projection line. The intersection line between the rear wall face of the right-front frame bar of the enclosure element 80 and the top surface of the battery cell 21 is the fourth intersection line. The intersection line between the right wall face of the right-front frame bar of the enclosure element 80 and the top surface of the battery cell 21 is the fifth intersection line. The intersection line between the front wall face of the front frame bar of the enclosure element 80 and the top surface of the battery cell 21 is the sixth intersection line. The connection line between the first projection point and the left end point of the fourth intersection line is the sixth connection line. The intersection point of the sixth connection line and the first projection line is the seventh intersection point. The connection line between the second projection point and the left end point of the sixth intersection line is the seventh connection line. The intersection point of the seventh connection line and the left side surface of the leftmost and frontmost battery cell 21 is the eighth intersection point. The distance between the center of the first pressure relief mechanism 215 and the seventh intersection point is $L_{15}$. The distance between the seventh intersection point and the left end point of the fourth intersection line is $L_{16}$. The length of the fourth intersection line is $L_{17}$. The length of the fifth intersection line is $L_{18}$. The length of the sixth intersection line is $L_{19}$. The distance between the eighth intersection point and the left end point of the sixth intersection line is $L_{20}$. The distance between the eighth intersection point and the center of the second pressure relief mechanism 16 is $L_{21}$, where $L=L_{13}+L_{16}+L_{17}+L_{18}+L_{19}+b_{20}+L_{21}$.

In a specific embodiment, as shown in FIGS. 35-37, the battery module 20 includes a column of battery cells 21, and the column of battery cells 21 are arranged along the length direction (X direction) of the box body 10. The front side of each battery cell 21 is provided with a first pressure relief mechanism 215. The left wall of the frame 14 is provided with two second pressure relief mechanisms 16 disposed front and rear. An annular channel 33 is formed between this column of battery cells 21 and the inner wall of the frame 14. The emissions released due to the thermal runaway of the battery cells 21 flow to the second pressure relief mechanism 16 through the annular channel 33.

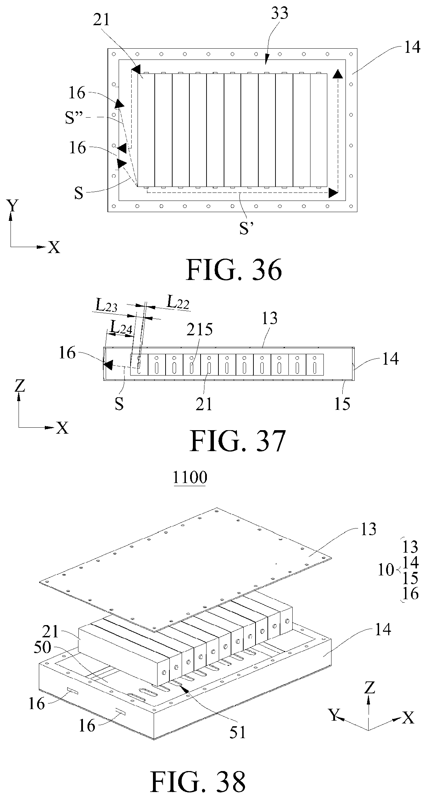

For the convenience of explanation, the discharge path of the leftmost battery cell 21 is selected as an example. After the emissions of this battery cell 21 are released, there are a plurality of discharge paths. The dotted arrows in FIG. 36 illustrate schematic diagrams of the three discharge paths of the emissions of this battery cell 21 discharged from the first pressure relief mechanism 215 to the second pressure relief mechanism 16. The discharge path of discharging the emissions to the left to the second pressure relief mechanism 16 on the front side is the third discharge path S. The discharge path of discharging the emissions to the right to the second pressure relief mechanism 16 on the front side is the fourth discharge path S'. The discharge path of discharging the emissions to the left to the second pressure relief mechanism 16 on the rear side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the front side surface of the battery cell 21 is the first projection point, and the projection point of the center of the second pressure relief mechanism 16 on the front side surface of the battery cell 21 is the second projection point. The projection line of the periphery of the first pressure relief mechanism 215 on the front side surface of the battery cell 21 is the first projection line. The connection line between the first projection point and the second projection point is the eighth connection line. The intersection point of the eighth connection line and the first projection line is the ninth intersection point. The intersection point of the eighth connection line and the left side surface of the battery cell 21 is the tenth intersection point. The distance between the center of the first pressure relief mechanism 215 and the ninth intersection point is $L_{22}$. The distance between the eighth intersection point and the tenth intersection point is $L_{23}$. The distance between the center of the second pressure relief mechanism 16 and the tenth intersection point is $L_{24}$, where $L=L_{22}+L_{23}+L_{24}$.

In a specific embodiment, as shown in FIGS. 38-40, the battery module 20 includes a column of battery cells 21, and the column of battery cells 21 are arranged along the length direction (X direction) of the box body 10. The bottom of each battery cell 21 is provided with a first pressure relief mechanism 215. The left wall of the frame 14 is provided with two second pressure relief mechanisms 16 disposed front and rear. An annular channel 33 is formed between the battery module 20 and the inner wall of the frame 14, and the annular channel 33 also extends between the partition and the inner wall of the frame 14. The battery cells 21 are supported on the bottom plate 15 by the partition 50, and a first sub-pressure relief channel 31 is formed between the partition 50 and the bottom plate 15. The partition 50 is provided with a plurality of first ventilable structures 51, and the plurality of first ventilable structures 51 are respectively connected to the first pressure relief mechanisms 215 of each battery cell 21 in a one-to-one correspondence. The emissions released due to the thermal runaway of the battery cells 21 flow to the second pressure relief mechanism 16 through the first sub-pressure relief channel 31 and the annular channel 33, where the first ventilable structure 51 is a through hole and the partition 50 is a liquid cooling plate.

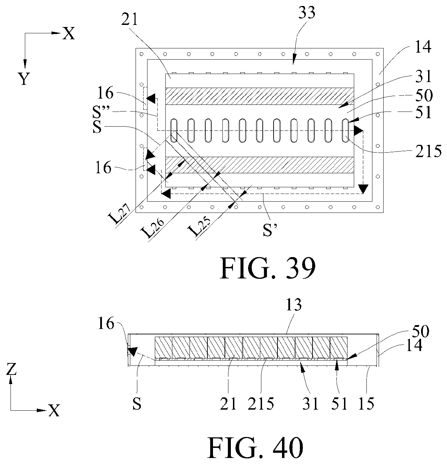

For the convenience of explanation, the discharge path of the leftmost battery cell 21 is selected as an example. After the emissions of this battery cell 21 are released, there are a plurality of discharge paths. The dotted arrows in FIG. 39 illustrate schematic diagrams of the three discharge paths of the emissions of this battery cell 21 discharged from the first pressure relief mechanism 215 to the second pressure relief mechanism 16. The discharge path of discharging the emissions to the left to the second pressure relief mechanism 16 on the rear side is the third discharge path S. The discharge path of discharging the emissions to the right to the second pressure relief mechanism 16 on the rear side is the fourth discharge path S'. The discharge path of discharging the emissions to the left to the second pressure relief mechanism 16 on the front side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the bottom surface of the partition 50 is the first projection point, and the projection point of the center of the second pressure relief mechanism 16 on the bottom surface of the partition 50 is the second projection point. The projection line of the periphery of the first pressure relief mechanism 215 on the bottom surface of the partition 50 is the first projection line. The connection line between the first projection point and the second projection point is the ninth connection line. The intersection point of the ninth connection line and the first projection line is the eleventh intersection point. The intersection point of the ninth connection line and the left wall face of the partition 50 is the twelfth intersection point. The distance between the center of the first pressure relief mechanism 215 and the eleventh intersection point is $L_{25}$. The distance between the eleventh intersection point and the twelfth intersection point is $L_{26}$. The distance between the center of the second pressure relief mechanism 16 and the twelfth intersection point is $L_{27}$, where $L=L_{25}+L_{26}+L_{27}$.

In a specific embodiment, as shown in FIG. 10 and FIG. 13, the difference between this embodiment and the previous one is that: the battery module 20 includes two columns of battery cells 21, the two columns of battery cells 21 are arranged along the width direction (Y direction) of the box body 10. Two ends of each column of battery cells 21 are connected with end plates 22. The battery cells 21 are supported on the partition 50, and the partition 50 is supported on the bottom plate 15 by the spacer elements 60. The number of the spacer elements 60 is three. The three spacer elements 60 enclose to form two first sub-pressure relief channels 31 extending along the width direction (Y direction) of the box body 10. The two first sub-pressure relief channels 31 are respectively connected to the first pressure relief mechanisms 215 of the two columns of battery cells 21, and each column of battery cells 21 is connected to a corresponding first sub-pressure relief channel 31. The emissions released due to the thermal runaway of the battery cells 21 flow to the second pressure relief mechanism 16 through the first sub-pressure relief channel 31 and the annular channel 33. In some embodiments, the first ventilable structure 51 is a through hole and the partition 50 is a liquid cooling plate.

For the convenience of explanation, the discharge path of the rightmost and frontmost battery cell 21 is selected as an example. After the emissions of this battery cell 21 are released, there are a plurality of discharge paths. The dotted arrows in FIG. 13 illustrate three schematic diagrams of the discharge paths of the emissions of this battery cell 21 discharged from the first pressure relief mechanism 215 to the second pressure relief mechanism 16. The discharge path of discharging the emissions released by the battery cell 21 to the right to the second pressure relief mechanism 16 on the front side is the third discharge path S. The discharge path of discharging the emissions to the right to the second pressure relief mechanism 16 on the rear side is the fourth discharge path S'. The discharge path of discharging the emissions to the left to the second pressure relief mechanism 16 on the front side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the bottom surface of the partition 50 is the first projection point, and the projection point of the center of the second pressure relief mechanism 16 on the bottom surface of the partition 50 is the second projection point. The projection line of the periphery of the first ventilable structure 51 on the bottom surface of the partition 50 is the first projection line. The connection line between the first projection point and the second projection point is the tenth connection line. The intersection point of the tenth connection line and the first projection line is the thirteenth intersection point. The intersection point of the right side wall of the partition 50 and the tenth connection line is the fourteenth intersection point. The intersection point of the plane passing through the tenth connection line and perpendicular to the bottom surface of the partition 50 and the lower edge line of the right wall face of the right end plate 22 is the fifteenth intersection point. The distance between the center of the first pressure relief mechanism 215 and the thirteenth intersection point is $L_{28}$. The distance between the thirteenth intersection point and the fourteenth intersection point is $L_{29}$. The distance between the fourteenth intersection point and the fifteenth intersection point is $L_{30}$. The distance between the center of the second pressure relief mechanism 16 and the fifteenth intersection point is $L_{31}$, where $L=L_{28}+L_{29}+L_{30}+L_{31}$.

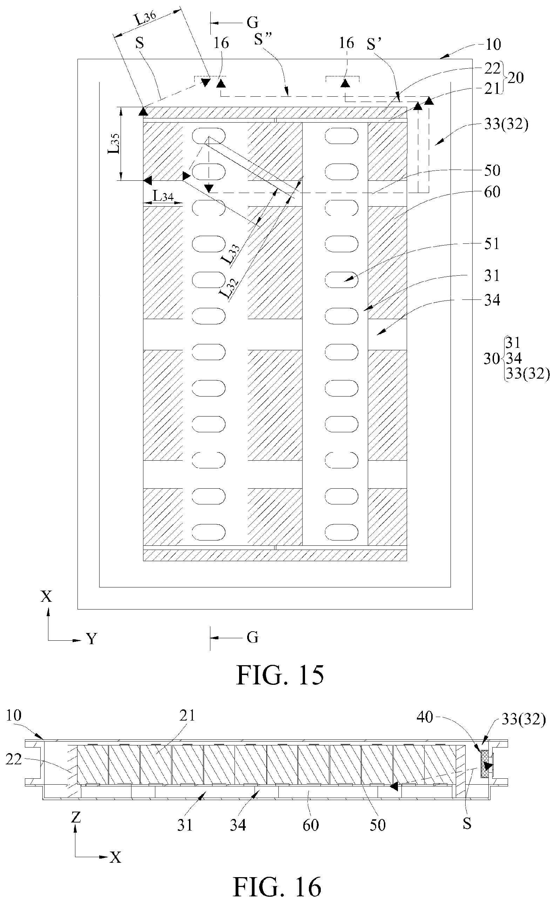

In a specific embodiment, as shown in FIG. 15 and FIG. 16, the difference between this embodiment and the previous one is that: the end plate 22 of the battery module 20 extends into the annular channel 33 and forms a sealing structure with the bottom plate 15. The number of the spacer elements 60 is twelve. The twelve spacer elements 60 are arranged in a matrix and enclose to form two first sub-pressure relief channels 31 and three second sub-pressure relief channels 34. The first sub-pressure relief channels 31 extend along the width direction (Y direction) of the box body 10. The two first sub-pressure relief channels 31 are disposed at an interval along the width direction (Y direction) of the box body 10. The second sub-pressure relief channels 34 extend along the width direction (Y direction) of the box body 10. The three second sub-pressure relief channels 34 are disposed at intervals along the length direction (X direction) of the box body 10. The emissions released by the battery cells 21 cannot enter the annular channel 33 through the end plate 22 to the right. Instead, they need to flow into the second sub-pressure relief channels 34 along the first sub-pressure relief channels 31, then enter the annular channel 33 through the second sub-pressure relief channels 34, and finally flow to the second pressure relief mechanism 16.

For the convenience of explanation, the discharge path of the rightmost and frontmost battery cell 21 is selected as an example. After the emissions of this battery cell 21 are released, there are a plurality of discharge paths. The dotted arrows in FIG. 15 illustrate three schematic diagrams of the discharge paths of the emissions of this battery cell 21 discharged from the first pressure relief mechanism 215 to the second pressure relief mechanism 16. The discharge path of discharging the emissions released by this battery cell 21 forward to the second pressure relief mechanism 16 on the front side is the third discharge path S. The discharge path of discharging the emissions backward to the second pressure relief mechanism 16 on the rear side is the fourth discharge path S'. The discharge path of discharging the emissions backward to the second pressure relief mechanism 16 on the front side is the fifth discharge path S". The lengths of both the fourth discharge path S' and the fifth discharge path S" are greater than the length of the third discharge path S, and the third discharge path S can be the shortest discharge path.

The length L of the third discharge path S can be measured by the following method: the projection point of the center of the first pressure relief mechanism 215 on the bottom surface of the partition 50 is the first projection point. The projection point of the center of the second pressure relief mechanism 16 on the front wall face of the right-frontmost spacer element 60 is the second projection point. The projection line of the periphery of the first ventilable structure 51 on the bottom surface of the partition 50 is the first projection line. The intersection line between the left wall face of the right-frontmost spacer element 60 and the bottom surface of the partition 50 is the seventh intersection line. The connection line between the rear end-point of the seventh intersection line and the first projection point is the eleventh connection line. The intersection point of the eleventh connection line and the first projection line is the sixteenth intersection point. The connection line between the front end-point of the seventh intersection line and the second projection point is the twelfth connection line. The intersection point of the right wall face of the right end-plate 22 and the twelfth connection line is the seventeenth intersection point. The distance between the center of the first pressure relief mechanism 215 and the sixteenth intersection point is $L_{32}$. The distance between the sixteenth intersection point and the rear end-point of the seventh intersection line is $L_{33}$. The length of the seventh intersection line is $L_{34}$. The distance between the front end-point of the seventh intersection line and the seventeenth intersection point is $L_{35}$. The distance between the seventeenth intersection point and the center of the second pressure relief mechanism 16 is $L_{36}$, where $L=L_{32}+L_{33}+L_{34}+L_{35}+L_{36}$.

In a specific embodiment, as shown in FIG. 18, FIG. 20 and FIG. 22, the difference between this embodiment and the previous one is that: an annular element 70 is provided in the annular channel 33. The annular element 70 divides the annular channel 33 into a first sub-annular channel 331 and a second sub-annular channel 332. The middle portions of the front and rear side walls of the annular element 70 are provided with second ventilable structures 71. The second ventilable structures 71 can connect the first sub-annular channel 331 and the second sub-annular channel 332, and the second ventilable structures 71 are through holes. In this way, the emissions released by the battery cells 21 enter the first sub-annular channel 331 after being discharged from the second sub-pressure relief channel 34, then enter the second sub-pressure relief channel 34 through the second ventilable structures 71, and finally flow to the second pressure relief mechanism 16 along the second sub-pressure relief channel 34. Referring to FIG. 18, the third discharge path S extends from the second sub-pressure relief channel 34, enters the first sub-annular channel 331, then enters the second sub-pressure relief channel 34 through the second ventilable structures 71, and finally flows to the second pressure relief mechanism 16.

The length L of the third discharge path S can be measured by the following method: the projection point of the center of the second pressure relief mechanism 16 on the front wall face of the front side wall portion 72 of the annular element 70 is the second projection point. The projection point of the center of the first ventilable structure 51 on the front wall face of the front side wall portion 72 of the annular element 70 is the third projection point. The connection line between the second projection point and the third projection point is the thirteenth connection line. The intersection point of the right wall face of the right side wall portion 72 of the annular element 70 and the thirteenth connection line is the eighteenth intersection point. The distance between the front end-point of the seventh intersection line and the third projection point is $L_{37}$. The distance between the third projection point and the eighteenth intersection point is $L_{38}$. The distance between the eighteenth intersection point and the center of the second pressure relief mechanism 16 is $L_{39}$, where $L=L_{32}+L_{33}+L_{34}+L_{37}+L_{38}+L_{39}$.

In another embodiment of the present application, as shown in FIG. 10 and FIG. 13, the cross-sectional area of the filter hole 401 with the largest hole diameter is S, the length of the shortest discharge path between the first pressure relief mechanism 215 of any battery cell 21 and the second pressure relief mechanism 16 is L, and then

$$0.002\,\mathrm{m/mm^2} < \frac{L}{S} < 55\,\mathrm{m/mm^2}$$ , where the unit of L is m and the unit of S is mm².

It can be understood that for the first pressure relief mechanism 215 of any battery cell 21, that is, the first pressure relief mechanism 215 of each battery cell 21, the shortest discharge path between the first pressure relief mechanism 215 of each battery cell 21 and the second pressure relief mechanism 16 satisfies the above equation.

By adopting the technical solution of this embodiment, the shortest discharge path L of each battery cell 21 and the cross-sectional area S of the filter hole 401 with the largest hole diameter of the filter element 40 are both within a reasonable design range, which better improves the reliability of the battery 1100.

In another embodiment of the present application, $0.008\,\mathrm{m/mm^2} \leq \frac{L}{S} \leq 16\,\mathrm{m/mm^2}$ .

By adopting the technical solution of this embodiment, the shortest discharge path L of the battery cell 21 and the cross-sectional area S of the filter hole 401 with the largest hole diameter of the filter element 40 are both within a more reasonable design range. The risk of the excessively high exhaust temperature of the battery 1100 is lower, and the reliability of the battery 1100 is better. In addition, with the design of $\frac{L}{S} \leq 16\,\mathrm{m/mm^2}$ , the cross-sectional area S of the filter hole 401 with the largest hole diameter can be designed to be relatively large, reducing the risk of the box body 10 bulging or a large number of spark particles being ejected from the battery due to poor exhaust.

In some embodiments, the value of $\frac{L}{S}$ can be, but is not limited to, 0.0021m/mm², 0.005m/mm², 0.005m/mm², 0.08m/mm², 0.1m/mm², 1m/mm², 10m/mm², 15m/mm², 16m/mm², 20m/mm², 25m/mm², 30m/mm², 35m/mm², 40m/mm², 45m/mm², 50m/mm² or 54.9m/mm².

In another embodiment of the present application, $0.05\,\mathrm{m} \leq L \leq 4\,\mathrm{m}$.

By adopting the technical solution of this embodiment, the length of the shortest discharge path is within this range. The shortest discharge path is not designed to be too short, which would result in a short cooling time for the particulate matter, causing the temperature of the particulate matter discharged from the battery 1100 to be high and easily deteriorating the external environment of the battery 1100. In addition, the shortest discharge path is not set to be too long, which would lead to a long exhaust time and untimely pressure relief, resulting in the explosion of the box body 10.

In some embodiments, the value of L can be, but is not limited to, 0.05 m, 0.1 m, 0.5 m, 2 m, 2.5 m, 3 m, 3.5 m or 4 m.

Table 1 below shows the parameters of the length L of the shortest discharge path, the parameters of the cross-sectional area S of the filter hole 401 with the largest hole diameter and the experimental results adopted in some experiments. The specific experimental method adopts the method described in GB 38031-2020, and will not be repeated here.

Table 1

| | L (m) | S (mm²) | L/S (m/mm²) | Result |
|---|---|---|---|---|
| Example 1 | 0.053 | 24.67 | 0.0021 | A small number of sparks ejected |
| Example 2 | 0.092 | 21.40 | 0.0043 | A small number of sparks ejected |
| Example 3 | 0.167 | 21.45 | 0.0078 | Extremely few sparks ejected |
| Example 4 | 0.050 | 6.25 | 0.0080 | Normal |
| Example 5 | 0.053 | 6.25 | 0.0085 | Normal |
| Example 6 | 0.053 | 0.07 | 0.7571 | Normal |
| Example 7 | 1.835 | 6.25 | 0.2936 | Normal |
| Example 8 | 1.835 | 6.25 | 0.2936 | Normal |
| Example 9 | 1.835 | 0.25 | 7.3400 | Normal |
| Example 10 | 3.792 | 6.25 | 0.6067 | Normal |
| Example 11 | 3.792 | 0.25 | 15.1680 | Normal |
| Example 12 | 4.000 | 0.25 | 16.000 | Normal |

(continued)

|  | L (m) | S (mm$^2$) | L/S (m/mm$^2$) | Result |
|---|---|---|---|---|
| Example 13 | 3.224 | 0.20 | 16.1200 | Slightly bulged box body |
| Example 14 | 3.852 | 0.16 | 24.0750 | Slightly bulged box body |
| Example 15 | 3.671 | 0.09 | 40.7889 | Box body bulging |
| Example 16 | 3.792 | 0.07 | 54.1714 | Box body bulging |
| Comparative example 1 | 0.063 | 31.15 | 0.002 | Fire breaking out |
| Comparative example 2 | 0.053 | 31.75 | 0.0017 | Fire breaking out |
| Comparative example 3 | 0.053 | 35.89 | 0.0015 | Fire breaking out |
| Comparative example 4 | 0.053 | 41.76 | 0.0013 | Fire breaking out |
| Comparative example 5 | 3.96 | 0.072 | 55 | Severely damaged box body |
| Comparative example 6 | 3.792 | 0.05 | 75.8400 | Severely damaged box body |
| Comparative example 7 | 3.792 | 0.03 | 126.4000 | Severely damaged box body |
| Comparative example 8 | 3.792 | 0.01 | 379.2000 | Severely damaged box body |

From the above table, it can be seen that when the value of $\dfrac{L}{S}$ is less than or equal to 0.002 m/mm$^2$, the temperature of the particulate matter discharged from the inside of the box body 10 is relatively high, the exhaust temperature of the battery 1100 is high, and it is likely to cause relatively serious fire hazards. When the value of $\dfrac{L}{S}$ is in the range of 0.0021 m/mm$^2$ to 0.0078 m/mm$^2$, only a small number of sparks are ejected from the box body 10, and the hazard is small and controllable. When the value of $\dfrac{L}{S}$ is in the range of 0.008 m/mm$^2$ to 16 m/mm$^2$, the box body 10 can be in a normal state. When the value of $\dfrac{L}{S}$ is in the range of 16.12 m/mm$^2$ to 54.1714 m/mm$^2$, the box body 10 is likely to bulge. Although the sealing performance of the box body 10 is affected to a certain extent, the battery 1100 can still be in a usable state. When the value of $\dfrac{L}{S}$ is equal to or greater than 55 m/mm$^2$, the sealing performance of the box body 10 is severely damaged, and at this time, the box body 10 may suffer serious damage or serious hazards such as excessive temperature.

In another embodiment, the volumetric energy density of the battery 1100 is E, the cross-sectional area of the filter hole 401 with the largest hole diameter is S, and then $17(\mathrm{Wh}/\mathrm{L})/\mathrm{mm}^2 \le \dfrac{E}{S} \le 11300(\mathrm{Wh}/\mathrm{L})/\mathrm{mm}^2$, where the unit of E is Wh/L and the unit of S is mm$^2$.

The volumetric energy density of the battery 1100 can refer to the energy contained in the unit volume of the battery 1100. In the actual use process, the volumetric energy density of the battery 1100 can be directly read from the nameplate of the battery 1100.

Generally, as the volumetric energy density of the battery 1100 increases, the severity of the thermal runaway of the battery 1100 increases, and the battery cells 21 release emissions more violently, resulting in emissions with higher temperature and faster speed surging towards the second pressure relief mechanism 16 along the pressure relief channel 30. The risk of the battery 1100 having an excessively high temperature intensifies, and the requirement for the filtering function of the filter element 40 is higher. The cross-sectional area of the filter hole 401 with the largest hole diameter of the filter element 40 can also be designed to be smaller.

By adopting the technical solution of this embodiment, through the setting of $17(\mathrm{Wh}/\mathrm{L})/\mathrm{mm}^2 \le \dfrac{E}{S} \le 11300(\mathrm{Wh}/\mathrm{L})/\mathrm{mm}^2$, the cross-sectional area S of the filter hole 401 with the largest hole diameter of the filter element 40 and the volumetric energy density E of the battery 1100 are rationally designed, reducing the risk of the excessively high exhaust temperature of the battery 1100 and contributing to improving the reliability of the battery 1100 in use. Under the condition of meeting the setting of $\dfrac{E}{S} \leq 11300 (\mathrm{Wh}/\mathrm{L})/\mathrm{mm}^2$ , when the volumetric energy density of the battery 1100 is fixed, the cross-sectional area of the filter hole 401 with the largest hole diameter will not be designed too small, so that the filter hole 401 can allow the particulate matter to pass through smoothly and quickly, thereby reducing the risk of serious damage to the box body 10 caused by blockage of the filter element 40, untimely pressure relief, etc. Under the condition of meeting the setting of $\dfrac{E}{S} > 17 (\mathrm{Wh}/\mathrm{L})/\mathrm{mm}^2$ , when the volumetric energy density of the battery 1100 is fixed, the cross-sectional area of the filter hole 401 with the largest hole diameter will not be designed too large, so that the filter hole 401 can block the particulate matter with higher temperature, thereby reducing the risk of the external environment of the battery 1100 deteriorating caused by a large number of sparks igniting the external flue gas.

In another embodiment, $23(\mathrm{Wh}/\mathrm{L})/\mathrm{mm}^2 \leq \dfrac{E}{S} \leq 3200(\mathrm{Wh}/\mathrm{L})/\mathrm{mm}^2$ .

By adopting the technical solution of this embodiment, the cross-sectional area S of the filter hole 401 with the largest hole diameter of the filter element 40 and the volumetric energy density E of the battery 1100 are more rationally designed. The risk of the external exhaust temperature of the battery 1100 being too high is smaller, and the reliability of the battery 1100 in use is better. In addition, with the design of $\dfrac{E}{S} \leq 3200(\mathrm{Wh}/\mathrm{L})/\mathrm{mm}^2$ , the cross-sectional area S of the filter hole 401 with the largest hole diameter can be designed to be relatively large, reducing the risk of the box body 10 bulging or a large number of spark particles being ejected from the battery due to poor exhaust.

In some embodiments, the value of $\dfrac{E}{S}$ can be, but is not limited to, 17 (Wh/L)/mm$^2$, 20 (Wh/L)/mm$^2$, 23 (Wh/L)/mm$^2$, 100 (Wh/L)/mm$^2$, 500 (Wh/L)/mm$^2$, 1000 (Wh/L)/mm$^2$, 1500 (Wh/L)/mm$^2$, 2000 (Wh/L)/mm$^2$, 2500 (Wh/L)/mm$^2$, 3000 (Wh/L)/mm$^2$, 3200 (Wh/L)/mm$^2$, 3500 (Wh/L)/mm$^2$, 4000 (Wh/L)/mm$^2$, 4500 (Wh/L)/mm$^2$, 5000 (Wh/L)/mm$^2$, 5500 (Wh/L)/mm$^2$, 6000 (Wh/L)/mm$^2$, 6500 (Wh/L)/mm$^2$, 7000 (Wh/L)/mm$^2$, 7500 (Wh/L)/mm$^2$, 8000 (Wh/L)/mm$^2$, 8500 (Wh/L)/mm$^2$, 9000 (Wh/L)/mm$^2$, 9500 (Wh/L)/mm$^2$, 10000 (Wh/L)/mm$^2$, 10500 (Wh/L)/mm$^2$, 11000 (Wh/L)/mm$^2$ or 11300 (Wh/L)/mm$^2$.

In another embodiment, $400\,\mathrm{Wh}/\mathrm{L} \leq E \leq 800\,\mathrm{Wh}/\mathrm{L}$ .

By adopting the technical solution of this embodiment, the volumetric energy density E of most batteries 1100 is within the above range, so that the above formula can be applied to most batteries 1100, and the range of application is wide.

In an embodiment, the value of E can be, but is not limited to, 400 Wh/L, 450 Wh/L, 500 Wh/L, 550 Wh/L, 600 Wh/L, 650 Wh/L, 700 Wh/L, 750 Wh/L or 800 Wh/L.

In another embodiment, $0.06\,\mathrm{mm}^2 \leq S \leq 25\,\mathrm{mm}^2$.

By adopting the technical solution of this embodiment, the cross-sectional area S of the filter hole 401 with the largest hole diameter is within the above range, and the filter element 40 can effectively intercept most of the high-temperature particulate matter, reducing the risk of the excessively high exhaust temperature of the battery 1100. If the cross-sectional area S of the filter hole 401 with the largest hole diameter is designed too small, the particulate matter is likely to block the filter element 40, resulting in untimely pressure relief and likely causing serious damage to the box body 10. If the cross-sectional area S of the filter hole 401 with the largest hole diameter is designed too large, the large particulate matter with higher temperature is likely to pass through the filter element 40, causing the excessively high exhaust temperature of the battery 1100.

In another embodiment, $0.25\,\mathrm{mm}^2 \leq S \leq 6.25\,\mathrm{mm}^2$.

By adopting the technical solution of this embodiment, the cross-sectional area of the filter hole 401 with the largest hole diameter is more rationally designed, which can further reduce the risk of the excessively high exhaust temperature of the battery 1100.

In one embodiment, the value of S can be, but is not limited to, 0.06mm$^2$, 0.1mm$^2$, 0.15mm$^2$, 0.2mm$^2$, 0.25mm$^2$, 0.3mm$^2$, 1mm$^2$, 2mm$^2$, 3mm$^2$, 4mm$^2$, 5mm$^2$, 6mm$^2$, 6.25mm$^2$, 7mm$^2$, 8mm$^2$, 9mm$^2$, 10mm$^2$, 12mm$^2$, 14mm$^2$, 16mm$^2$, 18mm$^2$, 20mm$^2$, 22mm$^2$, 24mm$^2$ or 25mm$^2$.

Table 2 below shows the parameters of the volumetric energy density E of the battery 1100, the parameters of the cross-sectional area S of the filter hole 401 with the largest hole diameter and the experimental results adopted in some experiments. The specific experimental method adopts the method described in GB 38031-2020, and will not be repeated here.

Table 2

| | E (Wh/L) | S (mm$^2$) | E/S ((Wh/L)/mm$^2$) | Result |
|---|---|---|---|---|
| Example 1 | 421 | 24.67 | 17 | A small number of sparks ejected |
| Example 2 | 421 | 21.05 | 20 | A small number of sparks ejected |
| Example 3 | 421 | 18.46 | 22.8 | Extremely few sparks ejected |
| Example 4 | 579 | 24.67 | 23 | Normal |
| Example 5 | 787 | 24.67 | 32 | Normal |
| Example 6 | 421 | 6.25 | 67 | Normal |
| Example 7 | 579 | 6.25 | 93 | Normal |
| Example 8 | 787 | 6.25 | 126 | Normal |
| Example 9 | 421 | 0.27 | 1559 | Normal |
| Example 10 | 579 | 0.19 | 3047 | Normal |
| Example 11 | 576 | 0.18 | 3200 | Normal |
| Example 12 | 787 | 0.24 | 3279 | Slightly bulged box body |
| Example 13 | 787 | 0.07 | 11243 | Box body bulging |
| Example 14 | 791 | 0.07 | 11300 | Box body bulging |
| Comparative example 1 | 421 | 31.75 | 13 | Fire breaking out |
| Comparative example 2 | 421 | 35.89 | 12 | Fire breaking out |
| Comparative example 3 | 421 | 41.76 | 10 | Fire breaking out |
| Comparative example 4 | 787 | 0.0693 | 11356 | Severely damaged box body |
| Comparative example 5 | 787 | 0.05 | 15740 | Severely damaged box body |
| Comparative example 6 | 787 | 0.03 | 26233 | Severely damaged box body |
| Comparative example 7 | 787 | 0.01 | 78700 | Severely damaged box body |

It can be seen from the above table that when the value of $\frac{E}{S}$ is less than 17 (Wh/L)/mm$^2$, the temperature of the particulate matter discharged from the inside of the box body 10 is relatively high, and the exhaust temperature of the battery 1100 is high, which is likely to cause relatively serious fire hazards. When the value of $\frac{E}{S}$ is in the range of 17 (Wh/L)/mm$^2$ to 22.8 (Wh/L)/mm$^2$, only a small number of sparks are ejected from the box body 10, and the hazard is small and controllable. When the value of $\frac{E}{S}$ is in the range of 23 (Wh/L)/mm$^2$ to 3200 (Wh/L)/mm$^2$, the box body 10 can be in a normal state. When the value of $\frac{E}{S}$ is in the range of 3279 (Wh/L)/mm$^2$ to 11300 (Wh/L)/mm$^2$, the box body 10 bulges. Although the sealing performance of the box body 10 is affected to a certain extent, the battery 1100 can still be in a usable state. When the value of $\frac{E}{S}$ is greater than 11300 (Wh/L)/mm$^2$, the sealing performance of the box body 10 is likely to be severely damaged, and at this time, the box body 10 may suffer serious damage or serious hazards such as excessive temperature.

For the battery in the embodiments of the present application, by rationally designing the structure of the filter element 40, it can effectively intercept the high-temperature particulate matter in the emissions from the thermal runaway of the battery. At the same time, it can also reduce the risk that the battery 1100 has poor pressure relief due to the blockage of the particulate matter, and even the risk of explosion.

In another embodiment of the present application, an electric device is also provided, including the battery 1100 as described in the above embodiments.

The above descriptions of the various embodiments tend to emphasize differences between the various embodiments. For same or similar parts thereof, refer to these embodiments. For brevity, details are not described herein again.

The above are only the preferred embodiments of the present application and are not intended to limit the present application. Any modifications, equivalent replacements, improvements, etc. made within the spirit and principles of the present application shall be included in the scope of protection of the present application.

**Claims**

1. A battery, comprising:

    a box body;
    a battery module located inside the box body, the battery module comprising at least one battery cell, each battery cell provided with a first pressure relief mechanism, and the box body having a second pressure relief mechanism; and
    a pressure relief channel connecting the first pressure relief mechanism of the at least one battery cell with the second pressure relief mechanism, the first pressure relief mechanism configured to release emissions generated inside the battery cell into the pressure relief channel under actuation, the pressure relief channel configured to guide the emissions to the second pressure relief mechanism, and the second pressure relief mechanism configured to release the emissions of the pressure relief channel to an exterior of the box body under actuation,
    wherein at least one of the battery cell, the battery module, the box body and the pressure relief channel is provided with a filter element, and the filter element is provided with filter holes configured to block passage of particulate matter in the emissions.

2. The battery according to claim 1, wherein when the filter element is provided in the battery cell, the first pressure relief mechanism and the filter element have an integrated structure, or the filter element is connected to a housing of the battery cell; and
    when the filter element is provided in the box body, the second pressure relief mechanism and the filter element have an integrated structure, or the filter element is connected to the box body; or a side wall of the box body is provided with the filter holes, and a portion of the side wall of the box body provided with the filter holes forms the filter element.

3. The battery according to claim 1 or 2, wherein when the filter element is provided in the box body, a side of the second pressure relief mechanism facing the battery module is provided with the filter element to block the particulate matter released by the battery cell from entering the second pressure relief mechanism; and/or a side of the second pressure relief mechanism facing away from the battery module is provided with the filter element to block the particulate matter released by the second pressure relief mechanism from passing through.

4. The battery cell according to claim 3, wherein a sum of cross-sectional areas of all the filter holes of the filter element is a filtration area;

    when the side of the second pressure relief mechanism facing the battery module is provided with the filter element, the filter element located on the side of the second pressure relief mechanism facing the battery module is a first filter element, and a filtration area of the first filter element is larger than a maximum pressure relief area of the second pressure relief mechanism; and
    when the side of the second pressure relief mechanism facing away from the battery module is provided with the filter element, the filter element located on the side of the second pressure relief mechanism facing away from the battery module is a second filter element, and a filtration area of the second filter element is smaller than the maximum pressure relief area of the second pressure relief mechanism.

5. The battery according to claim 4, wherein when the side of the second pressure relief mechanism facing the battery module is provided with a plurality of first filter elements, the plurality of first filter elements are arranged in sequence along a discharge path of the emissions released from the battery cell, and a filtration area of the plurality of first filter elements decreases along the discharge path of the emissions; and
    when a side of the second pressure relief mechanism facing away from the pressure relief channel is provided with a plurality of second filter elements, the plurality of second filter elements are arranged in sequence along a discharge path of the emissions released by the second pressure relief mechanism, and a filtration area of the plurality of second filter elements decreases along the discharge path of the emissions.

6. The battery according to claim 4 or 5, wherein when the side of the second pressure relief mechanism facing the battery module is provided with the plurality of first filter elements, hole diameters of filter holes of the plurality of first filter elements decrease along the discharge path of the emissions; and
when the side of the second pressure relief mechanism facing away from the pressure relief channel is provided with the plurality of second filter elements, hole diameters of filter holes of the plurality of second filter elements decrease along the discharge path of the emissions.

7. The battery according to any one of claims 3-6, wherein the filter element is disposed at an interval from the second pressure relief mechanism.

8. The battery according to any one of claims 3-7, wherein the filter element comprises a plate portion and an annular wall portion provided around the plate portion, one end of the annular wall portion is connected to the plate portion, the other end of the annular wall portion is connected to the box body, the annular wall portion is annularly provided around the second pressure relief mechanism, and at least one of the annular wall portion and the plate portion is provided with the filter holes.

9. The battery according to any one of claims 3-8, wherein the filter element has a first filter portion and a second filter portion, the first filter portion and the second filter portion both provided with a plurality of filter holes, and a first discharge path and a second discharge path are formed between the first pressure relief mechanism of the at least one battery cell and the second pressure relief mechanism, the first discharge path passes through the filter holes of the first filter portion, and the second discharge path passes through the filter holes of the second filter portion; and
when the length of the first discharge path is larger than the length of the second discharge path, the hole diameter of the filter hole of the first filter portion is larger than the hole diameter of the filter hole of the second filter portion.

10. The battery according to any one of claims 1-9, wherein the number of the filter holes is plural, hole diameters of any two of the filter holes are the same, or hole diameters of at least two of the filter holes are different.

11. The battery according to claim 10, wherein a cross-sectional area of the filter hole having a largest hole diameter is S, a shortest discharge path between the first pressure relief mechanism of the at least one battery cell and the second pressure relief mechanism is L, and then $0.002\,\mathrm{m/mm^2} < \dfrac{L}{S} < 55\,\mathrm{m/mm^2}$, wherein a unit of L is m and a unit of S is mm$^2$.

12. The battery according to claim 10 or 11, wherein a cross-sectional area of the filter hole having a largest hole diameter is S, a length of a shortest discharge path between the first pressure relief mechanism of any one battery cell and the second pressure relief mechanism is L, and then $0.002\,\mathrm{m/mm^2} < \dfrac{L}{S} < 55\,\mathrm{m/mm^2}$, wherein a unit of L is m and a unit of S is mm$^2$.

13. The battery according to claim 11 or 12, wherein $0.008\,\mathrm{m/mm^2} \leq \dfrac{L}{S} \leq 16\,\mathrm{m/mm^2}$.

14. The battery according to any one of claims 11-13, wherein $0.05\mathrm{m} \leq L \leq 4\mathrm{m}$.

15. The battery according to any one of claims 10-14, wherein a volumetric energy density of the battery is E, a cross-sectional area of the filter hole having a largest hole diameter is S, and then $17(\mathrm{Wh/L})/\mathrm{mm^2} \leq \dfrac{E}{S} \leq 11300(\mathrm{Wh/L})/\mathrm{mm^2}$, wherein a unit of E is Wh/L and a unit of S is mm$^2$.

16. The battery according to claim 15, wherein $23(\mathrm{Wh/L})/\mathrm{mm^2} \leq \dfrac{E}{S} \leq 3200(\mathrm{Wh/L})/\mathrm{mm^2}$.

17. The battery according to claim 15 or 16, wherein $400Wh / L \leq E \leq 800Wh / L$.

18. The battery according to any one of claims 11-17, wherein $0.06mm^2 \leq S \leq 25mm^2$.

19. The battery according to claim 18, wherein $0.25mm^2 \leq S \leq 6.25mm^2$.

20. The battery according to any one of claims 1-19, wherein the pressure relief channel further comprises first sub-pressure relief channels configured for connection with the second pressure relief mechanism, the battery further comprises a partition, the partition is configured to separate the battery module from the first sub-pressure relief channels, the partition is provided with a plurality of first ventilable structures, and each of the first ventilable structures connects the first pressure relief mechanism of the at least one battery cell and the first sub-pressure relief channels.

21. The battery according to claim 20, wherein the pressure relief channel comprises at least two first sub-pressure relief channels, each of the first sub-pressure relief channels connects first ventilable structures corresponding to a different battery cell, the first sub-pressure relief channels are separated by a spacer element.

22. The battery according to claim 21, wherein the pressure relief channel further comprises a communication channel, a wall face of the partition and an inner wall face of the box body enclose to form the communication channel, and each of the first sub-pressure relief channels is connected to the second pressure relief mechanism through the communication channel.

23. The battery according to claim 22, wherein the battery module comprises at least one column of battery cells, each column of battery cells comprises the at least one battery cell, each column of battery cells is correspondingly provided with at least one first sub-pressure relief channel, and each of the first sub-pressure relief channels extends along an arrangement direction of a corresponding column of battery cells; and each first ventilable structure corresponding to each column of battery cells is connected to a corresponding first sub-pressure relief channel.

24. The battery according to claim 23, wherein the second pressure relief mechanism is located at a side of an end of the battery module along an extension direction of the first sub-pressure relief channel.

25. The battery according to claim 24, wherein the communication channel is an annular channel, and the annular channel is annularly provided around the partition.

26. The battery according to claim 25, wherein two ends of the at least one column of battery cells are provided with end plates, and the end plates are inserted into the annular channel and are sealingly connected to the inner wall face of the box body; and
the pressure relief channel further comprises second sub-pressure relief channels, the second sub-pressure relief channels intersect the first sub-pressure relief channels, and the second sub-pressure relief channel is configured to communicate a corresponding first sub-pressure relief channel with the annular channel.

27. The battery according to claim 26, wherein two ends of each column of battery cells are provided with the end plates, and each of the first sub-relief channels communicates with the second sub-relief channel.

28. The battery according to claim 26 or 27, wherein the pressure relief channel comprises a plurality of the second sub-pressure relief channels, the second sub-pressure relief channels are separate by the spacer element.

29. The battery according to claim 28, wherein the plurality of second sub-relief channels are disposed at intervals in an extension direction of the first sub-relief channels.

30. The battery according to any one of claims 26-29, wherein the first sub-relief channels are perpendicular to the second sub-relief channels.

31. The battery according to any one of claims 25-30, wherein the annular channel is provided with an annular element connected to the box body, the annular element is configured to divide the annular channel into a first sub-annular channel and a second sub-annular channel, and the second sub-annular channel is annularly provided around the first sub-annular channel; and the annular element is provided with a second ventilable structure configured to communicate the first sub-annular channel and the second sub-annular channel, the second sub-annular channel is connected to the second pressure relief mechanism, and the first sub-annular channel is in communication with the first sub-pressure relief channel.

32. The battery according to claim 31, wherein the second ventilable structure is a through hole.

33. The battery according to claim 31 or 32, wherein the annular element comprises at least three side wall portions connected end to end in sequence, and a side wall portion close to the second pressure relief mechanism is provided with the second ventilable structure.

34. The battery according to claim 33, wherein when the filter element is provided in the box body, the side wall portion close to the second pressure relief mechanism is the filter element, and the filter hole is the second ventilable structure.

35. The battery according to claim 31 or 32, wherein the annular element comprises at least three side wall portions connected end to end in sequence, and a side wall portion far away from the second pressure relief mechanism is provided with the second ventilable structure.

36. The battery according to claim 35, wherein the side wall portion close to the second pressure relief mechanism is a first side wall portion, and at least one of a side wall portion adjacent to the first side wall portion and a side wall portion opposite to the first side wall portion is provided with the second ventilable structure.

37. The battery according to claim 35 or 36, wherein the second ventilable structure is located in a middle of a corresponding side wall portion.

38. The battery according to any one of claims 35-37, wherein when the filter element is provided in the box body, the side wall portion far away from the second pressure relief mechanism is the filter element, and the filter hole is the second ventilable structure.

39. The battery according to any one of claims 31-33 and 35-37, wherein when the filter element is provided in the box body, the filter element covers the second ventilable structure.

40. The battery according to any one of claims 24-34, wherein the filter element is located between the battery module and the second pressure release mechanism;

the filter element has the first filter portion and the second filter portion, the first filter portion and the second filter portion both provided with the plurality of filter holes, a first discharge path and a second discharge path are formed between the first pressure relief mechanism of the battery cell closest to the second pressure relief mechanism and the second pressure relief mechanism, the first discharge path passes through the filter holes of the first filter portion, and the second discharge path passes through the filter holes of the second filter portion; and when the length of the first discharge path is larger than the length of the second discharge path, the hole diameter of the filter hole of the first filter portion is larger than the hole diameter of the filter hole of the second filter portion.

41. The battery according to any one of claims 21-40, wherein the box body further comprises a bottom plate, the partition is supported on the bottom plate by the spacer element, the battery module is located above the partition, and the first pressure relief mechanism is located at a bottom of the battery cell.

42. The battery according to claim 41, wherein the partition is a thermal management component, and the thermal management component is configured to perform heat exchange with the battery module.

43. An electric device, comprising the battery according to any one of claims 1-42.

FIG. 1

FIG. 2

FIG. 3

FIG. 4

FIG. 5

FIG. 6

FIG. 7

FIG. 8

FIG. 9

FIG. 10

21

215

50

31

51

## FIG. 11

1100

E    E

Y

Z

## FIG. 12

FIG. 13

1100

FIG. 14

FIG. 15

FIG. 16

1100

FIG. 17

FIG. 18

FIG. 19

FIG. 20

FIG. 21

FIG. 22

1100

FIG. 23

FIG. 24

FIG. 25

FIG. 26

1100

FIG. 27

FIG. 28

FIG. 29

FIG. 30

FIG. 31

FIG. 32

FIG. 33

FIG. 34

FIG. 35

FIG. 36

FIG. 37

1100

FIG. 38

FIG. 39

FIG. 40

## INTERNATIONAL SEARCH REPORT

International application No.

**PCT/CN2023/119123**

| A. | CLASSIFICATION OF SUBJECT MATTER |
|---|---|

H01M 50/30(2021.01)i; H01M 50/35(2021.01)i; H01M 50/244(2021.01)i; H01M 50/249(2021.01)i; H01M 50/258(2021.01)i; H01M 50/209(2021.01)i

According to International Patent Classification (IPC) or to both national classification and IPC

| B. | FIELDS SEARCHED |
|---|---|

Minimum documentation searched (classification system followed by classification symbols)

IPC: H01M 50/-

Documentation searched other than minimum documentation to the extent that such documents are included in the fields searched

Electronic data base consulted during the international search (name of data base and, where practicable, search terms used)

CNTXT, ENTXT, ENTXTC, CNKI: 箱体, 电池单体, 泄压, 通道, 过滤, cabinet, cell, pressure release, passage, filtration

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 218586250 U (CONTEMPORARY AMPEREX TECHNOLOGY CO., LTD.) 07 March 2023 (2023-03-07) <br> description, paragraphs [0005]-[0006], [0016], [0019], [0057]-[0058] and [0067] | 1-43 |
| Y | CN 113224444 A (JIANGSU CONTEMPORARY AMPEREX TECHNOLOGY LIMITED) 06 August 2021 (2021-08-06) <br> description, paragraphs [0006] and [0126] | 1-43 |
| PX | CN 116742263 A (CONTEMPORARY AMPEREX TECHNOLOGY CO., LTD.) 12 September 2023 (2023-09-12) <br> claims 1-43 | 1-43 |
| A | CN 218939874 U (CONTEMPORARY AMPEREX TECHNOLOGY CO., LTD.) 28 April 2023 (2023-04-28) <br> entire description | 1-43 |
| A | US 2022166104 A1 (LG ENERGY SOLUTION, LTD.) 26 May 2022 (2022-05-26) <br> entire description | 1-43 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **15 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119123**

| Patent document cited in search report | | | Publication date (day/month/year) | Patent family member(s) | | | Publication date (day/month/year) |
|---|---|---|---|---|---|---|---|
| CN | 218586250 | U | 07 March 2023 | None | | | |
| CN | 113224444 | A | 06 August 2021 | None | | | |
| CN | 116742263 | A | 12 September 2023 | None | | | |
| CN | 218939874 | U | 28 April 2023 | None | | | |
| US | 2022166104 | A1 | 26 May 2022 | EP | 3916900 | A1 | 01 December 2021 |
| | | | | EP | 3916900 | A4 | 18 May 2022 |
| | | | | WO | 2021145646 | A1 | 22 July 2021 |
| | | | | KR | 20210091514 | A | 22 July 2021 |
| | | | | JP | 2022528263 | A | 09 June 2022 |
| | | | | JP | 7174864 | B2 | 17 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310675424

- GB 380312020 A